# EUROPEAN PATENT SPECIFICATION

(11) **EP 2 882 825 B1**
(45) Date of publication and mention of the grant of the patent: **19.10.2016**
(21) Application number: 13766131.0
(22) Date of filing: 02.08.2013
(51) Int. Cl.: C05B 7/00, C05G 3/04, C05G 3/06, C09K 17/40

(54) **. PRODUCT AND PROCESS FOR THE INTENSIFICATION OF PLANT CULTIVATION AND INCREASE PLANT FERTILLITY**
. PRODUKT UND VERFAHREN ZUR INTENSIVIERUNG EINER PFLANZENZUCHT UND ERHÖHUNG DER PFLANZLICHEN FRUCHTBARKEIT
PRODUIT ET PROCÉDÉ POUR L'INTENSIFICATION DE CULTURE DE PLANTE ET L'AUGMENTATION DE LA FERTILITÉ DE PLANTE

(30) Priority: 08.08.2012 HU P1200469
(43) Date of publication of application: 17.06.2015
(73) Proprietor: Plantaco Logisztikai és Szolgáltató Kft., 7696 Hidas (HU)
(72) Inventor: SEBESTYÉN, Endre, H-2484 Agárd (HU); KAKUK, Lászlo, H-1038 Budapest (HU); GERGELY, Zoltán, H-7150 Bonyhád (HU); KEMENES, Gábor, H-2484 Agárd (HU); GYULAI, Balázs, H-2475 Kápolnásnyék (HU); HEGYI, Tamás, H-6200 Soltvadkert (HU); TOMÓGSIK, Attila, H-4400 Nyiregyháza (HU); FEKETE , Zoltán, H-4031 Debrecen (HU)
(74) Representative: Stolmár & Partner Patentanwälte PartG mbB
(86) International application number: PCT/HU2013/000081
(87) International publication number: WO 2014/023988

(56) References cited:
- DATABASE WPI Week 200716 Thomson Scientific, London, GB; AN 2007-153171 XP002717099, & HU 0 400 242 A1 (ALGINIT KFT) 28 June 2006 (2006-06-28)
- DATABASE WPI Week 198737 Thomson Scientific, London, GB; AN 1987-259103 XP002717100, & HU H3 144 A (HORVATH L) 28 August 1987 (1987-08-28)
- DATABASE WPI Week 198609 Thomson Scientific, London, GB; AN 1986-057655 XP002717101, & HU T37 538 A (SZASZI E) 28 January 1986 (1986-01-28)
- DATABASE WPI Week 201001 Thomson Scientific, London, GB; AN 2009-R81941 XP002717102, & HU 0 800 092 A1 (BALOGH G B) 30 November 2009 (2009-11-30)

## Description

The FAO study "The situation of food production and agriculture 2003 " describes the situation that the arable land area has reached 0.82 hectares per capita worldwide, wherein 27% of this area is being used for agricultural crop production. This situation urges or a change in agricultural technology due to the significant loss in the fertility of soils in the last decades. Furthermore, according to the prognosis of FAO, the volume of agricultural production should be doubled by 2030-2035 in order to provide sufficient food for the population of the Earth, estimated to increasing up to 8-10 billion people. Besides the expansion of production, providing mineral microelements for human nutrition is more and more urgently needed since almost the half of the Earth population suffers from malnutrition and iron, zinc or selenicum deficiency. The first step of agricultural technology change is halting soil deterioration and initiating improvement. In environmental- and climate-friendly agricultural production, soil is regarded not only as a nutrient and water storage but a disperse system comprised of several phases which although itself is not living but the scene of life.

Several chemical and biological processes take place in the soil simultaneously which result in the transformation of mineral and organic matter entering into the soil depending upon the quality thereof as well as on the external environment. The rate and efficiency of chemical processes taking place in the soil similarly to synthetic chemical processes, depends on the presence of catalysts among other factors. Thus, for example, the surface of the solid particles of the soil act as catalyst. Based on the investigations of Hendrich and Dyall (4th. Int. Cong. Soilsci. II. 1950) Kreybig demonstrated that in case of the cultivated layer of one hectare loamy soil, the surface area of montmorillonite clay minerals acting as catalysts of chemical or biological processes occuring in the soil, exceeds 24 km².

Besides the mineral colloids, humic materials comprised of colloidal nitrogen-containing compounds are other important components characterizing the quality of agriculturally utilized soils. Among humic materials, humic acids having outstanding adsorption ability are the most important, which, from colloid-chemical point of view, behave similarly to the colloids originating from clay minerals. Conditions for their efficiency is their saturation with calcium, phosphate and potassium ions. The structure and composition of soil humic material is not fully known. The main component of humic material is humic acid. The humic material is mostly in the colloidal state and is rather amorphous than crystalline. The specific surface area and adsorption capacity of humic materials is higher that that of layered silicate minerals. The system which is comprised of clay minerals, organic colloids and humic acids is the bioorganomineral colloidal complex.

Further to the mineral (clay) and organic (humus colloidal components, phosphorous comprises the third determinating ingredient of the bioorganomineral colloidal complex, which is present on the surface of humic and clay colloids in form of phosphate.

During agricultural cultivation, the above-mentioned components of the soil are transformed, thus replenishing of the individual components becomes necessary, which is accomplished by fertilization or by the use of other soil conditioning agents.

Alginite is a mineral having high organic material content are comprised of humic material containing fossile biomass, malleated basalt tuff and lime have been used as soil improving material. An important physical property of alginite that each kilogram of the material is capable to bind 0,5 to 1 kg of water 80-90% of alginite is comprised of clay and stone meal fractions. The average humic material content is 30%, which at some places can be as high as 45%. The lime content measured as calcium carbonate is 33%, which at some places reaches 40%. So far 64 chemical elements have been detected from the fossile biomass. It is rich in macro- and microelements, among which its N:0.5%, P2O5: 0.6%, K2O: 0.9% ad Mg: 1% stands out. It contains montmorillonite, illite, dolomite, calcite, quartz, gypsum, plagioclase, siderite, magnesite, pirite and potash feldspar as mineral component. Besides the above-mentioned components, the most important microelements present are iron, manganese, copper, zinc, cobalt, nickel, lithium, titanium, chromium and cadmium. One of the special effects of humic materials is their biochemical, plant growth stimulating effect. During the use of alginite, the action of humic acids is both an enzyme-like and a hormone-like stimulating effect as well as stimulate plant growth indirectly by controlling the water-uptaking capability of the roots.

The zeolite-containing rhiolite tuff used for soil improvement contains nearly 40 different microelements. It has a composition wherein during th soil malleation, the mobilizable trace elements originating from devitrified igneous glass are present along with the mineral crystals of ion-exchanging zeolite. An especially preferable porous vehicle is the zeolite-containing rhiolite tuff having the Formula (Meⁿ⁺)_{x/n}[(AlO₂)ₓ(SiO₂)_{y}]*mH₂O, wherein Me is sodium(I), potassium(I), magnesium(II), calcium(II), zinc(II), copper(II), manganese(II) and iron(II) cations, the ratio of silicone and aluminium y:x can be between 1:1 and 10:1, the number of crystalline water molecules m can range between 0 and 20.

It is well known that silicate-based clay minerals store plant nutrients, primarily cations in the soil, thus both synthetic and natural clay minerals can be used in the nutrition of cultivated plants by building several other plant nutrient therein. Bentonite is widely used for the improvement (F. Köhlein : Gartenpraxis 10/1978 P. 515-516: R. Fahn: Wast ist bentonit? Sonderduck Südchemie AG. 1968) of structurally loose soils.

Montmorillonites of modified structure are being used in Israel for improving the efficiency and duration of action of macro- and micro nutrients (A. Banin; J. Navrot. Agron. J. 68, 353-358. 1976).

A method for the manufacture of vermiculite-based nitrogen fertilizer by treating vermiculite with ammonia has been described by J. Russel (J. Sci. Fd. Agric. 28, 852-854, 1974).

Synthetic zeolites (sodium aluminium silicates) are the soil improvers and nutrient carriers of the future. (A. Dyar, Ann. Meeting Sect. B; No. 41, Brit. Assoc. Adv. Sci. BAAT Salford 1980.)

Synthetic zeolites and zeolites of natural origin, such as klinoptilolite have been used as plant nutrition after enrichment with nutrient elements. (D. Hershey, J. Paul, R. Carson, Hort. Sci. 15, 87-89 1980.)

There is a known method wherein the H⁺ form of the synthetic zeolite is produced. In the method, usually hydrochloric acid, boric acid, hydrogen iodide, nitric acid, formic acid, acetic acid, benzenesulphonic acid, para-toluenesulfonic acid, methanesulphonic acid or a mixture thereof is used. The H⁺ form of the zeolites are treated with halogenides, nitrates, acetates, perchlorates or arylsulphonates of different metal ions. Phosphoric acid and/or phosphorous acid are usually not applied in the preparation of the H⁺ form of the zeolites since the phosphate anion is adsorbed on the layered silicates. This reaction probably results from the intricate combination of the dissolution of the mineral and/or the precipitation of the the added phosphorous/phosphoric acid with the cations amenable to ion exchange or present in the lattice. (Hinnich L.B. Talajkémia - Mezogazdasagi kiadó 1985.)

GB 1184332 A discloses a mineral complex having improved capacity comprising of organic and inorganic components. These components are different plant nutrients, chelating agents, plant extracts etc.

US 4,589,906 A discloses the incorporation of plant nutrients into an inorganic matrix, wherein the different components were included as organic and inorganic complexes. As plant nutrients, known macro and meso elements, as organic complexing agent, citric acid, ethylenediamine-tetraacetic acid, lignosulphonate, sea algae extract, humic materials, alginate etc. are used.

HU0400242 (AN 2007-15317) discloses a soil conditioning preparation containing milled alginite and zeolite.

It is known that in the plant culture, several conditions for cultivation has to be provided in order to increase crop yield with relatively small investment. Such cultivation conditions are, among others, the adjustment of growing conditions of seedlings and young plants and enhancing the resistance of the plants. Unforeseeable weather conditions can inflict especially big damage in plant cultivation. Due to lack in precipitation, there is no sufficient moisture and nutrient present in the root zone of the plants of tender age and under such conditions, the plants are retarded in development or perish. Environmental factors present significant risk not only at the emergence phase but also in later stages of development.

The objective of the present invention was developing a preparation and method, by which the conditions of plant development can be positively influenced, more specifically, by which water and nutrients essential for plants can be retained in loose as well as bound soils and the vitality of the emerging plants can be enhanced.

The above objective has been reached by development of a soil conditioning preparation comprising alginite and zeolite containing rhiolite tuff of suitable particle size. The present invention resides in a soil and plant conditioning product comprising alginite and zeolite, wherein the average particle size of the zeolite and alginite used in the formulation is between 0.05 and 500 µm, preferably between 0.05 and 100 µm, more preferably between 0.05 and 40 µm, the most preferably between 0.1 and 10 µm. In the present specification, under average particle size, the median is meant.

Particle size measurement and particle distribution analysis has been carried out using an Analysette 22 type laser particle analyzer, which operates on the basis of Fraunhoffer light deflection. The measurement range of the instrument can be selected between 0.1 and 1000 microns. The sample requirement is 0.5 to 1.0 g which are suspended in 250 ml of liquid (distilled water). In the case when distilled water is not suitable as suspending liquid, different other liquids (alcohols, glycerol, mineral and organic oils) can be used as well. The agglomerates are dispersed by ultrasonication and the homogeneous dispersion is maintained. The average particle size can be expressed as an algebraic average (S), geometrical mean (M), square quadratic mean (N) or harmonic mean (H) of the geometric particle size (x). Based on the distribution curves, the following values characterizing the particle size can also be reported. Median is the particle size belonging to the 50% point of the cumulative curve. The modal value is the particle size measured at the maximum of the density distribution curve. In the present specification, under average particle size, the median is meant, which is the particle size belonging to the 50% point of the cumulative curve.

Surprisingly, we have found that in the case when the average particle size of the zeolite and the alginite in the soil conditioning formulation resides in the range of 100-500 µm or in the range of 3-5 µm, the amount of the active ingredient necessary for the same biological effect is one tenth or one hundredth weight, respectively as compared to the case when the mixture of raw zeolite and alginite directly obtained from the quarry having 1 to 10 mm particle size are used. The effect of the preparation according to the present invention is demonstrated by the investigation thereof in white sweet peppers in Example 1.

A preferable embodiment of the solid or liquid formulation according to the present invention may comprise besides zeolite and alginite further excipients and/or nutrient or optionally plant protection materials conventionally used in plant cultivation. In a preferable embodiment, the formulation contains alkyl-polyglycoside compounds and surfactants. Such surfactants are, for example ionic or non-ionic surfactants. As an ionic surfactant, both anionic or cationic surfactants can be used. In the preparation, as an anionic surfactant, carboxymethylcellulose sodium of 1-5*10³ molecular weight and having 60-80 % degree of etherification, an alkyl sulphate, for example, ammonium lauryl sulphate, sodium lauryl sulphate, sulphonates, for example, dioctyl sulphosuccinate, alkylbenzene-sulphonates, phosphates, for example, aryl-alkyl-phosphates, alkyletherphosphates, carboxylates, for example, fatty acid esters, such as sodium stearate can be used. As a cationic surfactant, the preparation can contain, for example, cetyl-trimethylammonium bromide, cetyl-trimethylammonium chloride.

The formulation can contain as nonionic surfactant, for example, fatty alcohols, such as cetylalcohol, stearylalcohol, polyoxyethylene-glycols and alkylethers thereof, such as for example, octaethyleneglycol monododecylether, pentaethyleneglycol monododecylether, an alkylether of polypropyleneglycols, glycoside ethers, such as for example, decyl glycoside, lauryl glycoside, octyl glycoside, alkylpolyglycoside, polyoxyethylene-octylphenyl ether (Triton X-100), polyoxyethylene glycol alkylphenol ethers, for example, Nonoxinol-9, glycerol esters, for example, glycerol laurate, polysorbates, sorbitane alkylesters, polyethylene glycol-polypropylene glycols (poloxamers).

The formulation according to the present invention can especially advantageously contain as an anionic surfactant an alkyl-polyglycoside derivative corresponding to the general Formula I [R-O-(G)ₓ]ₙ-(D)_{y} wherein R is saturated or unsaturated, straight or branched, C₆₋₂₀, preferably C₈₋₁₆ carbon number aliphatic group, G = reduced sugar residue, preferably glucose residue which is attached through an R-O bonding to a different O-glycoside group, O is oxygen atom, D is a residue of polycarboxylic acid in salt form.

A preferable embodiment of the preparation according to the present invention can contain plant nutrients and excipients as well. Besides surfactants, the invention preferably contains fatty acids, preferably caprylic acid, pelargonic acid, capric acid or lauric acid or a mixture thereof.

Furthermore we have found that besides increasing the yield, surprisingly the formulation according to the present invention is suitable for improving the water balance of the soil. The differential porosity and pore volume changes have been examined under field conditions in 0.5-hectare plots of sandy soil for the case of Preparations 2 and 2/A described in Example 2. The particle size of the zeolite and alginite components of the formulation was between 3 and 5 µm and the formulations contained a surfactant as well. The best result obtained in both cases was reached at 6.4*10⁻⁴ kg formulation/ton soil dose. Under such conditions, while the total porosity remained essentially unchanged, the proportion of gravity pores decreased by 11 to 13 % and the proportion of capillary pores increased by 28% which influenced not only water supplying ability of the soil positively, but enhanced nutrient provision as well. When delivered into the field, the formulation according to the present invention seeps in the direction of deeper layers through gravity capillaries and forms a surface layer on soil particles, thus decreasing pore diameter. In the case when the formulation is applied to a soil without structure, such as sandy soil the formulation stick the lattice particles together thus to some degree, a water-impermeable, aggregate structure is formed, which is more suitable for cultivation. The increase in the water impermeability of soil particle aggregates has favourable effect in the case of bound soils wherein due to surface film formation, the swelling of the clay mineral decreases, consequently the agronomical structure becomes temporarily more favourable. The water-impermeability testing of aggregated grains has been carried out from the upper 20-cm layer of sandy, loamy and clay soils using Preparations 2 and 2/A and which have been applied in 1.6; 3.2; 6.4; 12.8; 25.6; 51.2*10⁻⁴ kg /ton soil (see Example 2). The water-permeability testing of aggregated grains has been carried out using a Kazo apparatus

(Dr. Szlávik: Hidrológi-Hidraulika egyetemi jegyzet Szent István Egyetem 2002) and the degree of improvement has been expressed in Sekera numbers. (Regarding the amount of the soil to be treated, a 20-cm layer of a moderately sedimented sandy soil was considered as the reference and 1.5 ton/m³ specific weight was used for calculating the doses.) In sandy soil, the improving effect was independent from the dose and pseudoaggregates were formed only. In loamy soils, the improving effect was proportional to the applied dose and even at the dose of 12.8*10⁻⁴ kg/ton excellent results were obtained.

By using the preparations according to the present invention, surprisingly the nutrient loss of the soil can be decreased. 6000 g sand are mixed with 20 g of potassium chloride and the Preparation 2 and Suspension 2/A according to Example 2 in a dose indicated in, Table 4 and the mixture was washed with an amount of water equivalent to 500 + 200 mm precipitation. The sand was heated at 250 °C. The data of Table 4 in Example 2 demonstrated that already a minimal amount of the preparation according to the present invention retains potassium which can be otherwise easily washed out from the soil.

The preparation for the intensificating of plant growth and increasing soil productivity according to the present invention in a preferable embodiment can likewise contain heat-treated zeolite as a zeolite component. According to another preferable embodiment of the preparation, the zeolite component is a zeolite treated with an organic and/or inorganic acid. It is possible to use in the preparation according to the present invention a zeolite component, which has been subjected to heat treament and acidic treatment. The preparation containing acid-treated zeolite contains a zeolite treated with an organic acid, preferably with malonic acid, fumaric acid, succinic acid, formic acid, acetic acid, benzenesulphonic acid, para-toluenesulphonic acid, methansulphonic acid and/or with inorganic acid, preferably with phosphoric acid, hydrochloric acid, boric acid, hydrogen iodide, nitric acid, sulphuric acid, preferably with phosphoric acid.

The weight propiortion of the zeolite and alginite components to each other in the preparations according to the present invention is 50:1 to 1:50, preferably 20:1 to1:20, more preferably 5:1 to 1:5.

In a preferable embodiment of the present invention, crude phosphate or monoammoniumphosphate is admixed into the formulation containing zeolite and alginite. In this case, the proportion of zeolite to alginite to crude phosphate or ammonium-monophosphate.is 0.1-100:1:0.1:100, preferably 0.1-30:1:0.1-55, the most preferably 0.1-5:1:0.1-10. Microcrystalline structure is characteristic to crude phosphate (phosphorite). Phosphorites are sea sediments containing calcium carbonate, sand and clay besides the phosphorous compounds. Phosphorites may contain large amounts of heavy metals, impurities. Their phosphorous content is 30 to 40 percent P₂O₅. A fertilizer containing finely gound phosphorite is available commercially under the trade name Hyperfoszfát (HP), which contains 26 percent P₂O₅ content.

During our studies, we found that when a preparation containig appropriate mineral and organic compounds for the restoration of productivity of the soils, they regenerate more rapidly and plants develop more robustly and more quickly than in the case when the ingredients are applied separately.
Furthermore we reached the surprising recognition that when zeolite-containing rhiolite tuff of natural origin, alginite and if desired, crude phosphate (e.g. Hyperfoszfat - Timac Agro Ausztria) are mixed in an appropriate proportion and milled to a suitable particle size, a highly efficient soil and plant conditioning product is obtained which exhibits new biological effects which is not present if the components of the formulation according to the present invention are used individually. Such an effect not experienced in the case of the individual ingredients is the rejuvenating effect, by which the fast regrowth of plants damaged by frost, insect-gnaw or a herbicide is induced. Similar effect is the enhancement of the draught-tolerance and water retaining ability of plants. The preparation according to the present invention furthermore facilitates the increase of the cation exchange capacity of the soil, by which increases the amount of the easily absorbeable nutrients for plants present in the soil.
Liquid-absorbing capacity of the components of the preparation according to the present invention is 18-25 g water / 100g for rhiolite tuff, 15-25 g water / 100 g for alginite and 14-18 g water / 100g for crude phosphate, respectively. The water-absorbing capacity of the preparation according to the present invention can be further increased when surfactants are added in solid or liquid form to the natural minerals milled to a suitable particle size. According to an advantageous embodiment of the formulation according to the present invention, the surfactant added to the minerals is carboxymethyl-cellulose sodium having 60 to 80 % percent of etherification and having the molecular weight 1-5*10⁵, a straight or branched chain carboxylic acid having C₈-C₁₆ alkyl chain or an esterified polyglycoside or mixtures thereof. It is an important characteristics of the components used in the preparation according to the present invention besides the improved liquid absorbing capacity is that their pH value is neutral or slightly alkaline and contain calcium which is important for the reproduction of soil microorganisms.

In the preparations containing a surfactant according to the present invention rhiolite tuff and alginite exhibits together a synergistic effect. In the case when preparations were compared in carrot plantations which differed only in that each of them contain the same amount of rhiolite tuff, alginite and mixture of rhiolite tuff and alginite respectively, we found that while the alginite-containing and rhiolite tuff containing formulations increase root weight of carrots by 12 to 19 percent and 19 to 20 percent, respectively, the formulation containing the mixture and delivered in the same dose increase root weight of carrots by 25 to 35 percent compared to the untreated control. Similarly, the carotene content is likewise significantly higher then the formulation containing the mixture has been applied.

In the preparations according to the present invention, by using acid treated or calcined zeolite-containing rhiolite tuff, alginite and if desired, soft crude phosphate, an organomineral complex can be produced which is similar in its effect to the effect of the bioorganomineral complex determining soil fertility. Organomineral systems according to the present invention serve the following different functions:
1. controlling mixtures, wherein the zeolite containing rhiolite tuff has sorptive effect for the ionic groups of N₂, NH₃, NH₄⁺, CH₂²⁻, O₂, CO, Cl⁻, SO₂, H₂S, thus positively affects soil nitrogen circulation (decreases nitrate wash-out, adsorps ammonia)
2. nutrient mixtures wherein each of the alginite, soft crude phosphate and the zeolite-containing rhiolite tuff contains rare trace elements, thus improving microelement provision. Furthermore alginite and crude phosphate contains organic or slowly binding, easily absorbable phosphorous, furthermore calcium and magnesium which is provided to the soil microorganisms and plants.
3. Accomodating carriers which are due large specific surface area and internal porosity of the zeolite containing rhiolite tuff are suitable for binding different agrochemicals and storage of organic and inorganic salts, synthetic compounds as an inert vehicle. Furthermore the zeolite containing rhiolite tuff can be utilized as a reaction medium wherein the internal surface accelerates chemical and biological processes as a catalyst occuring in the soil solution.
4. Materials improving the water balance of the soil, wherein the zeolite containing rhiolite tuff and the alginite retains water in the soil, thus improving water supply of the plants and moderating the wash out of nutrients, which effect is further enhanced by the large molecular weight organic polymers.

The zeolite containing rhiolite tuff consists of two parts, which are the vulcanoic rock of basic character rich in microelements and the zeolite embedded into the volcanoic rock which allows its participation in an acid-base reaction as a base for salt formation.

The heat-treated zeolite used is produced by heating crude zeolite at a temperature between 100 and 700 °C, preferably 130 and 500°C, the most advantageously between 150 and 350°C.

In an acidic treatment of the zeolite utilized, organic or inorganic acids, such as, for example, phosphoric acid, hydrochloric acid, boric acid, hidrogen iodid, nitric acid, sulphuric acid, formic acid, malonic acid, fumaric acid, acetic acid, benzenesulphonic acid, para-toluenesulphonic acid, methanesulphonic acid can be used.

According to an advantageous embodiment of the preparation according to the present invention, the formulation contains a treated or untreated zeolite in an amount between 1 and 80 weight percent, preferably in an amount between 5 and 40 weight percent, alginite in an amount between 1 and 80 weight percent, preferably in an amount of 5 to 40 weight percent, furthermore 1 to 40 weight percent of large molecular weight organic compounds, for example, carboxymethylcellulose sodium having 60 to 80 percent etherification degree and the molecular weight of 1-5*10⁵, a branched or straight chain C₈-C₁₆ carboxylic acid and preferably 5 to 20 weight percent of esterified polyglycoside derivative.

The preparations according to the present invention include products which contain plant nutrient elements as well besides the soil and plant conditioning materials. As plant nutrient elements nitrogen fertilizers, such as sodium, calcium, ammonium or potassium nitrates, urea, urea-formaldehyde condensates, oxamide or calcium cyanamide are contained.

In the case when the preparations according to the present invention contain a nitrogen source as a nutrient, the nitrogen content of the formulation can be preferably between 0.1 to 10.0 percent by weight. Phosphorous containing fertilizers suitable as plant nutrients are ammonium or potassium phosphates and phosphonates, polyphosphate, urea-phosphate, superphosphate, termic phosphate, calcium phosphate and bone meal. In the case when such a phosphorous source is present in the formulation, the phosphorous content of the formulations expressed as phosphorous pentoxide is preferably between 0.1 and 40.0 percent by weight.

As a potassium containing nutrient, potassium chloride, potassium nitrate, potassium sulphate, potassium phosphate or potassium phosphonate can be utilized in the composition according to the present invention. In the case when a potassium source is present in the preparation, the potassium content of the formulation calculated as potassium oxide is preferably between 0.1 and 10.0 percent by weight.

The preparations according to the present invention can contain from the secondary nutrients calcium, magnesium, sulphur (sulphur, carbonate, chloride, nitrate, phosphate), microelements (in the form of oxide, salt or in chelate form) such as boron, iron, manganese, cobalt, molybdenum, zinc, copper or mixture thereof.

The preparations according to the present invention can furthermore contain nitrogen sources of plant or animal origin, such as peptides, proteins, amino acids, plant extracts, vegetable oils, plant hormones, vitamins, phytoalexin elicitors preferably in an amount of 0.001 to 10.0 percent by weight.

The preparations according to the present invention can contain a carbon source such as glucose, fructose, saccharose, laminarine or alginate amenable for rapid utilization and suitable for boosting the activity of agriculturally useful microorganisms in an amount of 0.05 to 20.0 weight percent, preferably 5 to 10 weight percent calculated for the total weight of the preparation.

The formulations according to the present invention can contain in addition to the active ingredients an excipient used in the agriculture, such as, if desired, a binder, a disintegrant, an antiadhesive agent and chemical stabilizing agent, a dispersant, a tenside, a penetration enhancing agent, a complexing agent, stabilizing agents, solvents, suspension stabilizers or mixtures thereof.

As binders and disintegrants, the formulation according to the present invention can contain preferably lignosulphonates, humates, humic acid extracts, starch, cellulose, natural plant extracts or mixtures thereof. The formulation can contain as antiadherent and chemical stabilizer preferably sodium sulphate, zinc sulphate, aluminium sulphate, iron sulphate, magnesium hydroxide, sodium methacrylate or mixtures thereof. As a dispersant, preferably for example a sodium or ammonium salts of a sulphonate, naphtalene or methylnaphtalene and formaldehyde condensate, lignosulphonates, sodium, calcium or ammonium salts of polyethoxylated lignosulfonate, sodium taurides or sodium or ammonium salt of maleic anhydride based copolymers or mixtures thereof, as a tenside, preferably ethoxylated natural and artificial alcohols or mixtures thereof, as penetration enhancing agent, preferably ammonium sulphate, ammonium phosphate, ammonium trimethylenephosphoric acid, diammonium hydrogenphosphate, ammonium carbonate, ammonium acetate, triammonium phosphate, ammonium hydrogencarbonate, urea, ammonium hydrogensulphate or mixtures thereof. As a complexing agent, preferably ammonium sulphate, sodium sulphate, trisodium sulphate, nitrilotriacetic acid trisodium salt, salts of ethylenediamine-tetraacetic acid, citric acid, malic acid, ammonium phosphates, salts of hydroxyethanediphosphoric acid, salts of nitrilo-tris-methylenephosphoric acid or mixtures thereof, as stabilizing agent, preferably natural or epoxylated vegetable oils (sunflower oil, rapeseed oil, soy oil, fennel oil, neem oil, orange oil), epoxylated fatty acids or esters thereof or mixtures of the above can be present in a concentration of 0.1 to 2 percent by weight, preferably in an amount of 1 percent by weight. The formulation can contain water, ethanol, 1,2-propylene glycol, mineral or vegetable oils or mixtures thereof as solvent. If so desired, the formulation can contain suspension stabilizers, for example, polyvinyl alcohols, polyethylene glycols, potassium palmitate, ammonium laurate or mixtures thereof.

Formulations according to the present invention can be presented as solids, preferably in powder or granule form or as liquids, preferably as suspensions or suspoemulsions. The formulations according to the present invention can be used as soil or foliage fertilizer depending on the desired production objective independently from their state of matter.

In the case when the solid formulation is delivered as a soil fertilizer, the technical limits of mechanized dispersing should be considered. Special dispersing equipment designed for delivering microgranules are able to deliver particles of 0.4 to 1.0 mm diameter and 0:7 to 1.2 mm length uniformly in 17 to 20 kg/hectare dose. Fertilizer particles delivered in this way are built up in the preparations according to the present invention from smaller particulates having the size between 10 and 40 microns, preferably between 5 and 10 microns. We have surprisingly found that in the case when fertilizers having the usual particle size (between 3 and 6 mm) are built up similarly to microgranulated starter fertilizers from particles having size between 10 and 40 microns, preferably 1 to 10 microns, their biological efficiency significantly exceeds the efficiency of homogeneous fertilizers which are not formed from microparticles as demonstrated in testing performed in tomato. A fertilizer built up from particles having the size between 10 and 40 microns to fertilizer granules having 3 to 5 mm particle size can increase the yield of tomatoes by 10 to 30 percent as compared to the formulations comprised of homogeneous particles of 3 to 5 mm (Example 7).

In the case when the fertilization of the total area is desired by particles of 3 to 6 mm, the dose of the formulation built up from microparticles can be decreased from the presently applied 300 to 500 kg/hectare to 50-150 kg/hectare. The granules according to the present invention thus contain particles having the size of 0.05 to 500 µm, preferably 0.05 to 100 µm, more advantageously 0.05 to 40 µm, the most advantageously 1 to 10 µm. The formulations according to the present invention thus produced can contain further plant nutrients and excipients.

Very advantageous granules according to the present invention are comprised of particles having an average particle size of 0.05 to 500 µm, preferably 0.05 to 100 µm, more advantageously 0.05 to 40 µm, the most advantageously 1 to 10 µm which comprise 10 to 80 weight percent, preferably 30-70 weight percent of monoammonium phosphate, 5 to 40 weight percent, preferably 10-30 weight percent of rhiolite tuff and 5 to 40 weight percent, preferably 10-30 weight percent of alginite and if desired, 0.01 to 10 weight percent, preferably 1-6 weight percent of zinc sulphate monohydrate, 0.01 to 2 weight percent, preferably 0.1-1 weight percent of molybdenum, cobalt and/or copper containing salt, 0.01 to 15 weight percent, preferably 0.1-10 weight percent of potassium chloride, 0.01 to 30 weight percent, preferably 0.1-20 weight percent of liquid soil conditioning preparation, preferably Amalgerol Premium and/or C₈-C₁₀ nonionic alkyl-polyglycoside, 0.01 to 5 weight percent of lignosulphonate calcium and/or magnesium salt and 0-5 weight percent of water, each calculated on the basis of the preparation.
In soils having loose structure and low organic and clay colloid content, granules formed from particles having average size of 200 to 400 µm can be applied advantageously. In strongly bound clay soils rich in loam and organic colloids, granules formed from particles having an average particle size of 1 to 100 µm are preferable, which in medium-bound loamy field soils, granules formed from particles having average size of 100 to 200 µm can be used most preferably.
The preparations according to the present invention can be presented as sprayable formulations, thus water soluble granules, suspensions, suspoemulsions and wettable powder formulations.

According to an especially advantageous embodiment of the present invention, the average particle size of the particles of the suspension formulation are between 0.5 and 10 µm and the suspension contains on the basis of the weight of the formulation 2 to 10 weight percent, preferably 4-6 weight percent of zeolite containing rhiolite tuff, 5 to 30 weight percent, preferably 10-20 weight percent of alginite, 5 to 20 weight percent, preferably 8-16 weight percent of urea-formaldehyde condensate, 5 to 20 weight percent, preferaby 8-16 weight percent of C₈-C₁₀ non-ionic alkylpolyglycoside, 1 to 10 percent by weight, preferably 2-7 percent by weight of short chain polysaccharide, 1 to 5 weight percent, preferably 2-3 weight percent of potassium humate, 1 to 5 weight percent, preferably 2-3 weight percent of ethoxylated-phosphated tristyrylphenol, 0.1 to 3 weight percent, preferably 0.5 to 1 weight percent of ethoxylated-phosphated castor oil, optionally 0.01 to 5 weight percent, preferably 0.5 to 2 weight percent of lignosulphonate sodium salt, 1 to 10 weight percent, preferably 2 to 7 weight percent of monopropylene glycol, optionally 0.01 to 1 weight percent, preferably 0.5 to 1.5 weight percent of silicone antifoam and/or 0.01 to 1 weight, preferably 0.05 to 1.5 weight percent of xanthan gum, 0.05 to 1 weight percent, preferably 0.05 to 1.5 weight percent of sodium benzoate and 30 to 60 weight percent, preferably 35-45 weight percent of water.

In regard to the sprayable formulations there is a requirement of uniform particle size in the range of 0.5 to 5 mikrometers and good floating and adherent property. Sprayable formulations can be used for soil treatment and foliar treatment as well. In the case of soil treatment, the dose of the formulations for each hectare is between 10 and 60 liter;kg/ha, in case of foliar treatment, the dose is 1 to 10 liter;kg/ha. The dose is related to preparations containing active ingredient and carrier.

The preparations according to the present invention can be used as plant conditioning agents in irrigation farming. Unfavourable soil changes occuring due to irrigation farming such as increasing salt concentration, deterioration of soil structure require the use of soil conditioning formulations which can be delivered together with irrigation water without any further operations.
There is an expectation in respect of such preparations for aggregating destructed soil particles and improving water retention ability of soil particles. Due to the thus formed aggregated, grainy soil structure, the water to air ratio in soil is improved, the harmful salt concentration decreases and the efficiency of fertilization is enhanced. The condition for delivering together with irrigation water for the preparation according to the present invention is suitable particle size of the solid particles present therein, which is according to biological and technical requirements between 1 and 40, optimally between 1 and 10 microns. Liquid soil conditioning formulations comply with the above-mentioned requirements in the case when their specific surface area is large and they are capable to enhancing the activity of soil microorganisms. The above requirements are satisfied by mixtures comprising zeolite containing rhiolite tuff and alginite having particle size of 1 to 10 microns. Such formulations can contain different agents promoting the activity of soil microorganisms as well as plant nutrients.

Preparations according to the present invention can be produced by mixing untreated, heat-treated zeolite or zeolite treated with organic and/or inorganic acids with alginite and optionally with further plant nutrients and excipients, preferably surfactants and if desired, granulating the mixture or transforming the mixture into a suspoemulsion. The method can be carried in a manner that alginite and the untreated or heat-treated zeolite or a zeolite treated with organic and/or inorganic acids are separately milled to the average particle size of 0.05 to 500 µm, prefeably 0.05 to 100 µm, preferably 0.05 to 40 µm, the most preferably 0.1 to 10 µm using a method known from the prior art, the milled materials are mixed and homogenized and if desired, further active ingredients or excipients, preferably surfactants are mixed thereto. It is possible to mix alginite and the untreated or heat-treated zeolite or a zeolite treated with an organic and/or inorganic acid and optionally further active ingredients and excipients, preferably surfactants are mixed and using a method known from the prior art, the mixture is milled to an average particle size of 0.1 to 500 µm, preferably 0.1 to 100 µm, more preferably 0.1 to 40 µm, the most preferably 1 to 10 µm and the mixture thus obtained is transformed into a suspoemulsion or granule, optionally by adding further excipients. One can proceed by preparing a suspension of alginite which is adsorbed by the zeolite.
During the preparation of the formulation, the above-mentioned other nutrients of plant origin can can be used as a further active ingredient. As excipients, the excipients disclosed above in detail can be applied. Starting from the powder mixture, preparation of granules, suspoemulsion, or emulsion can be prepared easily according to methods known from the art.
One can proceed by mixing the components into a solution, suspension of resin, polymerizing the resin and milling the thus obtained solid mixture to an average particle size of 0.05 to 500 µm, preferably 0.05 to 100 µm, more preferably 0.05 to 40 µm, the most preferably 0.1 to 10 µm using a method known from the prior art.

An especially advantageous method for the preparation of the granules according to the present invention comprises milling 10 to 80 weight percent, preferably elönyösen 30-70 weight percent of monoammonium phosphate, 5 to 40 weight percent, preferably 10-30 weight percent of rhiolite tuff and 5 to 40 weight percent, preferably 10-30 weight percent of alginite calculated for the weight of the formulation to an average particle size of 0.05 to 500 µm, preferably 0.05 to 100 µm, more preferably 0.05 to 40 µm, the most preferably 0.1 to 10 µm, homogenizing and optionally mixing thereto 0.01 to 10 weight percent, preferably 1-6 weight percent of zinc sulphate monohydrate, 0.01 to 2 weight percent, preferably 0.1 to 1 weight percent of molybdenum, cobalt, copper containing salt, 0.01 to 15 weight percent, preferably 0.1 to 10 weight percent of potassium chloride, 0.01 to 30 weight percent, preferably 0.1 to 20 weight percent of liquid soil conditioning preparation (for example Amalgerol Premium and/or C₈-C₁₀ nonionic alkyl-polyglycoside), 0.01 to 5 weight percent of lignosulphonate calcium and/or magnesium salt and balance water up to a water content to 0-5 weight percent of water content, pressing the mixture through an extruder at a temperature between 20 and 100°C, preferably between 50 and 100°C, the most advantageously between 60 and 80°C using 1 mm bore size, cooling and drying the exiting extrudate for a short period of time, transferring the extrudates into a spheronizer operated at 1500 rpm and milling the extrudate to obtain rods of 0.1 to 2 mm and optionally separating the 0.4-1.2 mm fraction using a vibrating sieve.
The especially advantageous suspension preparation according to the present invention can be prepared by dissolving in 30 to 60 weight percent, preferably 35-45 weight percent of water calculated for the weight of the formulation 0.05 to 1 weight percent, preferably 0.05-1.5 weight percent of sodium benzoate, 1 to 5 weight percent, preferably 2-3 weight percent of ethoxylated-phosphated tristyrylhenol, 0.1 to 3 weight percent, preferably 0.5 to 1 weight percent of ethoxylated-phosphated castor oil and 1 to 10 weight percent, preferably 2 to 7 weight percent of monopropylene glycol, optionally 0.01 to 5 weight percent, preferably 0.5-2 weight percent of lignosulphonic acid sodium salt and to the thus obtained solution are added on the basis of the weight of the formulation 2 to 10 weight percent, preferably 4 to 6 weight percent of zeolite containing rhiolite tuff, 5 to 30 weight percent, preferably 10 to 20 weight percent of alginite, 5 to 20 weight percent, preferably 8 to 16 weight percent of urea-formaldehyde condensate, 5 to 20 weight percent, preferably 8-16 weight percent of C₈-C₁₀ nonionic alkyl-polyglycoside, 1 to 10 weight percent, preferably 2-7 weight percent of short-chain polysaccharide mixture and subsequently 1 to 5 weight percent, preferably 2 to 3 weight percent of potassium humate, suspending the mixture uniformly and if desired, stabilizing the mixture by adding 0.01 to 1 weight percent, preferably 0.5-1.5 weight percent of silicone antifoam and/or 0.01 to 1 weight percent, preferably 0.05-1.5 weight percent of xanthan gum and subsequently milling to an average particle size of 1 to 10 microns and if desired, filtered, packaged.

As surfactant, ionic and/or nonionic surfactants, as ionic surfactants, cationic or anionic surfactants or mixtures thereof can be used. Preferable surfactants have been disclosed above.

During the preparation of the acid-treated zeolite component of the preparations according to the present invention, one can proceed by mixing the zeolite with phosphoric acid and/or phosphorous acid, fulvic acid and/or humic acid and organic acids, for example, malonic acid, fumaric acid, succinic acid or if desired, inorganic acids, such as sulphuric acid, nitric acid, hydrochloric acid or mixtures thereof. In this case, preferably individually or admixed to a further solid vehicle, a zeolite containing rhiolite tuff having the formula (Meⁿ⁺)_{x/n}[(AlO₂)ₓ(SiO₂)_{y}]*mH₂O is used, wherein Me represents sodium(I), potassium(I), magnesium(II), calcium(II), zinc(II), copper(II), manganese(II) or iron(II) ion, the ratio of silicone and aluminium y:x is between 1:1 to 10:1, m represents the number of crystal water molecules ranging between 0 and 20 and/or synthetic zeolites, preferably faujasite, cabasite, gmelinit, mordenite, offretite, zeolite ZSM-35 or Zeolite P. One can proceed by adding phosphoric acid or another inorganic or organic acid to the zeolite. The acids applied while reacting with the zeolite, digest it and exchange the cations partly to protons while the acids are transformed into phosphate and other salts depending on the quality of the acid applied depending on the composition of the zeolite. Thus a mixture of phosphate and other salts is formed on the surface of the vehicle.

According to the most preferable method, one can proceed by reacting the zeolite containing rhiolite tuff having the Formula (Meⁿ⁺)_{x/n}[(AlO₂)ₓ(SiO₂)_{y}]*mH₂O with phosphoric acid and/or optionally with mixture of phosphoric acid and phosphorous acid. As a result of this reaction, rare trace element become available for absorption by plant (lithium, rubidium, vanadium, titanium) which are usually not present in commercially available trace element fertilizers. The prolonged availability of the digested rare trace elements for plants become possible due to the humic materials of alginite used together the rhiolite tuff, since these form complexes with metal cations released in ion exchange processes induced by phosphoric acid inhibiting the formation of insoluble metal phosphates. In the case when malonic acid, fumaric acid, succinic acid, ascorbic acid and ammonium phosphate, ammonium sulphate, ammonium nitrate, potassium phosphate, potassium nitrate or mixture thereof suitable as nutrients for soil microorganisms is used for digestion together with phosphoric acid and/or phosphorous acid, then a preparation suitable for increasing the activity of soil microorganisms living in the root zone as well as increasing the amount thereof for each gram of soil, which can be used in itself or together with other active ingredients for preparation of formulations according to the present invention.

The preparation of heat-treated zeolite comprises heating a zeolite at a temperature between 100 and 700°C, preferably between 130 and 500 °C, the most preferably between 250 and 350 °C for a period of preferably 0.5 to 10, more preferably 1 to 5, the most preferably for 1-1.5 hours. The heat treatment can be carried out in presence of air or in an inert atmosphere (for example, in nitrogen stream).

During the preparation of the formulation, chemical operations such as mixing, homogenization, milling and others (such as separating particle fractions and selecting the fractions used in the formulation) can be carried out according to methods known from the state of the art using apparatus disclosed in the state of the art. Granulation, preparation of emulsion, suspoemulsion can be carried out by using knwon methods and apparatus as well. Selecting methods and optimizing thereof during the preparation of the formulation belongs to the general knowledge of the person skilled in the art.

Th advantages of the use of the formulations according to the present invention resides in that the formulations containing zeolite containing rhiolite tuff and alginite exhibiting high ion exchange capacity stabilize the pH of the root zone due to their buffer capacity and moderate the harmful effect of high salt concentration of soil solution on microorganisms. Due to the presence of ingredients and effects enhancing the living conditions of microorganisms, the conditions for the large-scale propagation of agriculturally useful microorganisms becomes possible in the rhizosphere. When using the formulations according to the present invention, aerobic microorganisms become dominant in the rhizosphere, thus influencing the composition of the rhizosphere in regard to agriculturally useful microorganisms, thus their activity. The consequence of the renewal of soil life is the improvement of soil structure, reactivation of soil productivity and improvement of nutrient formation ability. The zeolite and alginite resources of the formulations according to the present invention in a clay soil builds into the clay layers and takes up the nutrients bound therein. Subsequently the water channelling ability of the soil improves and the soil becomes more loose. In sandy soil, due to high sorption capacity, the nutrients are bound and are not washed out, thus become available for the roots. Water utilization of the soil is improved and after large rainfalls, the amount of recess water decreases. The formulation according to the present invention due to its composition exhibits a buffer effect due to humus (alginite) component and restores soil pH by stimulating hydrogen ions. The formulation increases the efficiency of fertilizers by its large ion exchange capacity, especially cation exchange capacity, improves the absorption thereof and prevents washing out. Increase of microbial activity of rhizosphere as well as the provision of rapidly absorbeable nutrients in the period of germination results in accelerated early development of the plants, greater root weight as well as improved water and nutrient supply. Due to improved water and nutrient supply the amount of crop yield increases thus the efficiency of the production improves. A further advantage of the use of the preparations is the improvement of the health condition of the root zone. Due to the augmentation of the microbe population according to the production objective as well as due to larger root weight the damages caused by phytopathogen microorganisms and soil-borne insect pests are decreased, which results in decreasing plant protection costs as well as smaller exposition of the environment and the crop to pesticides.
Due to the microelement structure of the formulations according to the present invention fitting better to the plant's nutrient, especially microelement requirement developed during phylogenesis, during the application of the preparations according to the present invention the microelement supply of plants and consequently the activitly of enzymes responsible for the control of physiological processes is accordingly improved, which allows the improvement of resistence against biotic and abiotic stress. Formulations according to the present invention increase photosynthetic activity of the plants as well, which results in an increased yield of the crop and improved quality thereof. The increase in the products of secondary metabolism (carotene, capsaicine, licopine) is especially prominent in the production of industrial crops.

The invention is demonstrated by the following examples without limiting our right to protection to the examples.

### Example 1

### Investigation of the biological effect of the particle size of zeolite and alginite (zeolite:alginite 1:1)

The simultanous effect of zeolite and alginite mixtures having different particle size has been studied in white eating peppers. It can be concluded that the biological effect of the formulations is highly dependent on the particle size of the active ingredients. The optimal particle size - depending on the method of use - is between 3 and 100 microns.

**Table 1**

| Particle size | Treating material | Method of treatment | Dose | Average weight g/ea | % |
|---|---|---|---|---|---|
| - | - | - | - | 72.8 | 100 |
| crude (from the mine) particle size 1-10mm | Alginite+Zeolite | sprayed onto the total area | 2 kg/m² - 20 t/ha | 138 | 189.5 |
| | Alginite+Zeolite | | 1 kg/m² - 10 t/ha | 127 | 174.5 |
| | Alginite+Zeolite | | 0.5 kg/m² - 5 t/ha | 107.3 | 147.4 |
| 100-500 µm | Alginite+Zeolite | sprayed onto the total area | 0.2 kg/ m² - 2 t/ha | 136.3 | 187.2 |
| | Alginite+Zeolite | | 0.1 kg/ m² - 1 t/ha | 129.2 | 177.5 |
| | Alginite+Zeolite | | 0.05 kg/ m² - 500 kg/ha | 106.8 | 146.7 |
| 3-5 µm | Alginite+Zeolite | row treatment | 0.02 kg/ m² - 200 kg/ha | 141.2 | 194.0 |
| | Alginite+Zeolite | | 0.01 kg/ m² - 100 kg/ha | 123.7 | 170.0 |
| | Alginite+Zeolite | | 0.005 kg/ m² - 50 kg/ha | 106.9 | 146.8 |

### Example 2

### Investigation of the soil-improving effect of the formulation according to the present invention

Using the invention, the porosity of soils can be improved, which can be proved by the change in capillary water rise. The testing was carried out with a preparation according to the present invention having the following composition:

**Table 2**

| | Preparation 2 [weight parts] | Preparation 2/A [weight parts] |
|---|---|---|
| Alginite | 5.00 | 5.00 |
| Zeolite | 15.00 | 15.00 |
| Soft, earthy crude phosphate (Hyperfoszfát - Timac Agro Austria) | 7.00 | 7.00 |
| Ethoxylated nonylphenol | 4.00 | 4.00 |
| Silicone antifoam | 0.08 | 0.08 |
| Citric acid hydrate | 0.17 | 0.17 |
| Calcium acetate | 3.00 | 3.00 |
| Sodium bentonit clay | 2.00 | 2.00 |
| Polydimethylsiloxane | 0.30 | 0.30 |
| Hydrated silicone dioxide | 0.60 | 0.60 |
| Xanthan gum | 0.20 | 0.20 |
| Formulation 2/1* | 20.00 | 0.00 |
| lon-exchanged water | 42.65 | 62.65 |
| Total | 100.00 | 100.00 |

| | | |
|---|---|---|
| * **A one-kilogram batch of Preparation 2/1 is prepared as follows:** | | |

45.2 g of C₈₋₁₀ non-ionic alkyl-polyglycoside (Monatrope 1620, Croda) are dissolved with vigorous stirring in 500 ml of water together with 4.8g of carboxymethylcellulose sodium having 70-80% etherification degree and 2-3*10⁵ molecular weight, 1g di-1-pmethone, 0.3g sodium sulphosuccinate, 0.4g octylphenoxy-polyethoxyl-ethanol (Triton X-100) mixture and 5g of sunflower oil. 6 g of 44 weight percent dioctyl-sulphosuccinate sodium solution are added and the weight is brought to 1000 g final weight.

### Preparation of Formulations 2:

Silicone antifoam, ethoxylated nonylphenol, citric acid hydrate, calcium acetate, sodium bentonite clay, polydimethyl siloxane, hydrated silicone dioxide and the Formulation 2/1 are added to the ion-exchanged water (50%). The mixture is homogenized using a high-shear mixer and while mixing, the solid zeolite, alginite and crude phosphate addition is started. The crude suspension thus obtained is forwarded by a peristaltic pump into a dynoKLD bead mill filled with zirconium beads having a diameter of 1 mm up to 70% at a flow rate of 3 liters/hour. After each milling run, the particle size is checked. The suspension is recycled until the proportion having a particle size above 5 microns exceeds 0.5%. If the particle size of 1 to 5 microns is reached, the necessary amount of xanthan gum is added in form of 5% aqueous solution and balance water (45%) and the mixture is homogenized using a low rpm mixer.

### Preparation 2/A:

Preparation 2/A is produced according to the method for the production of Preparation 2 with the modification that the addition of component 2/1 is omitted.

### Study of the soil porosity improving effect of Preparation 2 and 2/A

### a.)

Preparation 2 produced according to the method described above is used for improving the porosity of soils. Soil porosity of different soils can be modelled by capillary water rise test. In this test, tubes made of asbestos cement having a diameter of 10 cm and height of 10 cm are filled with 600 g sandy, loamy and clay soil respectively which are subsequently dried until slack water content. Preparation 2 is subsequently flown through the loaded tubes. Capillary water rise has been tested after 5 and 20 hours.

**Table 3: The effect of Preparation 2 to the capillary water rise of soils dried up to slack water content**

| Dose of the Formulation 2 kg/t soil | Sand | | Loam | | Clay | |
|---|---|---|---|---|---|---|
| | **5 hours** | **24 hours** | **5 hours** | **24 hours** | **5 hours** | **24 hours** |
| | | | | | | |
| 0 | 252 | 155 | 180 | 155 | 112 | 208 |
| 0.16*10⁻⁴ | 247 | 343 | 179 | 347 | 115 | 221 |
| 0.30*10⁻⁴ | 236 | 335 | 181 | 355 | 129 | 263 |
| 0.64*10⁻⁴ | 208 | 287 | 163 | 326 | 142 | 679 |
| 1.28*10⁻⁴ | 211 | 276 | 195 | 401 | 156 | 310 |
| 2.56*10⁻⁴ | 157 | 280 | 165 | 312 | 141 | 285 |
| 5.12*10⁻⁴ | 142 | 260 | 157 | 307 | 139 | 263 |

It is apparent from the data of the table that in sandy soil up to 2.56*10⁻⁴ kg dose (512 kg/ha) the result is optimal since results measured in sandy soil correspond to data measured in loam.

### b.)

Under field conditions in sandy soil plots of 0.5 hectare size the differential porosity and pore volume changes were studied. Preparation 2 has been applied in the doses of 1.6; 3.2; 6.4; és 12.8*10⁻⁴ kg/ton in this study. The effect of the suspension not containing Preparation 2/1 (Preparation 2/A) has also been tested which has been produced by a method similar to the preparation method of and in a composition similar to that of Preparation 2. In both cases, best results were obtained using the dose of 6.4*10⁻⁴ kg/ton. In this case, while the total porosity has remained essentially unchanged, the proportion of the gravity pores decreased by 11 to 13 percent, while the proportion of capillary pores increased by 28 percent which influenced not only water supply ability but nutrient supply ability positively as well. The formulation according to the present invention delivered leaks through the gravity pores to the direction of deeper layers and forms a surface layer on the soil particles, thus decreasing the pore diameter. When the preparations according to the present invention are delivered to unstructured soil (sand), the preparations provides for sticking the lattice parts and thus to some extent, a water-resistent, grainy structure more amenable to culture is formed. Increase in water stability of soil grains has positive effect in case of bound soils as well, wherein due to surface film formation, the swelling of the clay mineral is decreased, thus the agronomical structure becomes temporarily more favourable.

### c.)

The grain water stability testing has been carried out from 20-cm surface layer of sand, loam and clay soils using 1.6; 3.2; 6.4; 12.8; 25.6; 51.2*10⁻⁴ kg/ton soil doses of the preparation according to Example 2. The effect of both Preparation 2 supplemented with the Preparation 2/1 and the alginite and zeolite suspension free from that component (Preparation 2/A) has been studied. Grain water stability testing has been carried out with Kazo apparatus and the degree of improvement has been expressed by Sekera numbers. (in respect of the amount of soil to be treated, the 20-cm layer of moderately settled sandy soil was regarded as base and a 1.5 ton/m³ specific weight has been used for the calculation of the doses). In sandy soils, the improving effect was independent from the dose and only pseudo-grains were formed. In case of loamy soil, the improving effect was dose-dependent and even at the dose of 12.8*10⁻⁴ kg/ton the friable structure is formed. By using the formulations according to the present invention, the loss of nutrient from the soil can be decreased.

20 g potassium chloride and a dose of Preparation 2 and Suspention 2/A indicated in the table respectively were mixed to 6000 g of sand and the mixture was washed with water corresponding to 500 + 200 mm precipitation. Sand was heated at 250 degrees centigrade.

**Table 4**

| **Effect of Formulations 2 and 2/A to the K₂O content of water leaking through sand, expressed as percentage of control** | | | | | | |
|---|---|---|---|---|---|---|
| **Dose** Kg preparation/ ton soil | **500 mm precipitation** | | **200 mm precipitation** | | **700 mm precipitation** | |
| | **Prep. 2** | **Prep. 2/A** | **Prep. 2** | **Prep. 2/A** | **Prep. 2** | **Prep. 2/A** |
| | | | | | | |
| 0 | 100 | 100 | 100 | 100 | 100 | 100 |
| 0.16*10⁻⁴ | 76.3 | 75.7 | 97.2 | 87.6 | 85.3 | 79.4 |
| 0.30*10⁻⁴ | 90.8 | 90.1 | 71.2 | 70 | 84.3 | 83.7 |
| 0.64*10⁻⁴ | 75.4 | 72.8 | 78.7 | 78.7 | 79.5 | 74.6 |
| 1.28*10⁻⁴ | 68.9 | 67.6 | 85.2 | 75.2 | 75.4 | 71.5 |
| 2.56*10⁻⁴ | 60.6 | 62.4 | 72.8 | 78.3 | 70.5 | 69.9 |
| 5.12*10⁻⁴ | 70.2 | 69.9 | 67.5 | 67.5 | 70.7 | 70.1 |

From the data of the table, it can be concluded that even a minimal amount of the preparation according to the present invention retains potassium which can be easily washed out from the soil.

### Example 3

### Study of the effect of a wettable powder containing rhiolite tuff and alginite

The effect of rhiolite tuff and alginite on the average root weight and beta-carotene content was studied in carrot.

Tests were carried out using the preparation having the following composition:

**Table 5**

| Constituents | Rhiolit tuff A [weight parts] | Rhiolit tuff B [weight parts] | Alginite A [weight parts] | Alginite B [weight parts] | Rhiolit tuff + Alginite A [weight parts] | Rhiolit tuff + Alginite B [weight parts] |
|---|---|---|---|---|---|---|
| Rhiolit tuff 80WP | 80 | 80 | - | - | 40 | 40 |
| Alginite 80WP | - | - | 80 | 80 | 40 | 40 |
| Polyoxylethylene -tristiryl-phenyl-sulphuric acid isopropylamine salt | 2 | 2 | 2 | 2 | 2 | 2 |
| Polycarboxylate | 3 | 3 | 3 | 3 | 3 | 3 |
| Sodium alkyl-naphtalene-sulphonate | | 3 | 3 | 3 | 3 | 3 |
| Addition product of 40 mols of ethylene oxide and 1 mol of pelarginic acid | 6 | - | 6 | - | 6 | - |
| Caolin | 6 | 12 | 6 | 12 | 6 | 12 |
| Total | 100 | 100 | 100 | 100 | 100 | 100 |

(80WP designates 80 percent active ingredient content, the remainder of the composition is vehicle and excipient.)

The compositions were prepared by homogenizing the constituents designated in the table in a Lödige type mixer and the homogenate thus obtained was milled in an eddy mill to the particle size of 0.5 to 3.0 µm.

**Table 6**

| Effect of the treatments on the characteristics of carrots | | | | | |
|---|---|---|---|---|---|
| Treatment | Dose (kg/ha) | Average root weight | | Carotene content | |
| | | G | % | mg/100g raw weight | % |
| Untreated control | - | 178 | 100 | 21.6 | 100 |
| Rhiolit tuff B | 20 | 197 | 119.7 | 27.9 | 129.2 |
| Riolit tuff A | 20 | 217 | 120.5 | 34.3 | 140.3 |
| Alginite B | 20 | 201 | 112.9 | 26.8 | 124.1 |
| Alginite A | 20 | 213 | 119.7 | 32.1 | 148.6 |
| (Alginite and Rholit tuff) B formulation | 20 | 225 | 126.4 | 30.1 | 139.5 |
| (Alginite and Rhiolit tuff) A formulation | 20 | 239 | 134.2 | 36.9 | 171.5 |

The formulations were delivered four times in 5 kg/hectare dose each.

The studies carried out in carrots demonstrate that alginite and zeolite containing rhiolite tuff has favourable effect on the quantity as well as the quality of the produce.

### Example 4

### Preparation of granules and studies on the effect thereof

The following preparations have been produced for the testing:

**Table 7**

| Designation of the preparation | 4/A | 4/B | 4/C |
|---|---|---|---|
| | [weight parts] | [weight parts] | [weigh parts] |
| Rhiolit tuff | 45 | - | - |
| Riolit tuff (pretreated) | - | 40 | 40 |
| Alginite (untreated) | 45 | - | - |
| Alginite (pretreated) | - | 45 | 45 |
| Dextrin | 5 | 5 | 5 |
| 30 m/m% aqueous solution of 80m/m% sunflower oil and 20% Doly(oxy-ethylene)-alkylether | 5 | - | 5 |
| Caolin | - | 10 | 5 |
| Total | 100 | 100 | 100 |

Pretreatment of rhiolite tuff used in Formulations A 4/B and 4/C was carried out as follows: Rhiolite tuff having particle size of 100-400 µ was treated with 75 m/m% phosphoric acid wherein the product contained 90 weight percent rhiolit tuff and 10 weight percent 75 m/m% of phosphoric acid.

Pretreatment of alginite used in Formulations 4/B and 4/C was carried out as follows: alginite having particle size of 100-400 µ was impregnated with 40 weight percent of potassium phosphate solution wherein the product contained 90 weight percent of alginite and 10 weight percent of 40 m/m% potassium phosphate solution.

### Preparation of the compositions:

The ingredients of the compositions were mixed in a Lödige mixer and milled in a Bantam mill to the particle size of 1-40 µ and water is added to the formulation, followed by thorough kneading. The wet mass is granulated using an oscillating granulator. Wet granules are dried and sieved using a 0.4-1.2 mm mesh sieve. The effect of the thus obtained 0.4-1.2 mm particle fraction has been studied in maize.

The effect of the formulations according to the present invention on the crop yield of maize and the available nutrient content of the soil

**Table 8**

| **Treatments** | **Dose kg/hectare** | **P₂O₅ mg/kg** | **K₂O mg/kg** | **Ca mg/kg** | **Yield kg/hectare** | **Control %** |
|---|---|---|---|---|---|---|
| Control | - | 175 | 159 | 1503 | 7820 | 100 |
| 4/A | 20 | 189 | 175 | 1615 | 8156 | 104.3 |
| 4/A | 40 | 198 | 189 | 1627 | 8617 | 110.9 |
| 4/B | 20 | 195 | 209 | 1649 | 8150 | 104.2 |
| 4/B | 40 | 203 | 225 | 2075 | 8610 | 110.1 |
| 4/C | 20 | 207 | 200 | 1773 | 8950 | 114.5 |
| 4/C | 40 | 215 | 207 | 1870 | 9350 | 119.6 |

Beyond the production of microgranules, the fractions obtained by milling can be used for the manufacture of granules having the usual particle size (2-4 mm). During the production, starting from the milled fractions, layered granules are produced by the addition of a binder and a wetting liquid using a plate granulator. Granules thus obtained are coated with anti-caking agents in the end of the production, independently of the actual production method.

Preparations according to Example 4 can be used by themselves or in admixture with other microgranulated fertilizers or mixed with fertilizers having the usual particle size. Advantageous properties of the thus obtained mixtures are, among others, the following:
- better microelement supply for the plants
   improvement of the biological activity of the root zone
   better air and water economy of the soil and better nutrient supply ability

### Example 5

### Preparation of a stabilized, concentrated plant conditioning suspoemulsion and study of the effect thereof in apple

**Table 9**

| Ingredients | Composition of Preparation 5/A and 5/B [weight parts] |
|---|---|
| Alginite | 10 |
| Rhiolite tuff | 25 |
| C₈₋₁₀ nonionic alkyl-polyglycoside (AG 6210, Agzo Nobel) | 7 |
| Ethoxylated nonylphenol | 3 |
| Silicone antifoam | 0.08 |
| Citric acid hydrate | 0.17 |
| Calcium-lignosulphonate | 1 |
| Calcium acetate | 3 |
| Sodium bentonite clay | 2 |
| Polydimethyl siloxane | 0.3 |
| Hydrated silicone dioxide | 0.6 |
| Xanthan gum | 0.2 |
| lon-exchanged water | 47.65 |
| Total | 100 |

### Preparation of Formulation 5/A:

All materials, with the exception of the alginite and rhiolite tuff are added to the ion-exchanged water during continous intense stirring. Subsequently the alginite and rhiolite tuff are weighed in and the solids are milled in a ball mill to the particle size of 0.5-3 mikrons (A).

### Preparation of Formulation 5/B:

Formulation 5/B is produced as described for Formulation 5/A with the difference that the particle size is set to 6-10 microns(B).

The effect of the formulations was tested in apple.
The quality parameters were evaluated before storage-in and after 90 days of storage in Jonika cuttivar. The formulation according to the present invention was used in a dose of 5.0 l/hectare the same time when plant protection treatments were carried out.

Effect of treatments for the quality parameters tested as compared to production plant protection treatments %.

**Table 10**

| Treatment | Fruit weight | | Meat hardness | | Brix number | |
|---|---|---|---|---|---|---|
| | storage-in | storage-out | storage-in | storage-out | storage-in | storage-out |
| Production treatment | 100 | 100 | 100 | 100 | 100 | 100 |
| Production treatment + A | 118 | 132 | 109 | 117 | 108 | 112 |
| Production treatment + B | 107 | 125 | 103 | 109 | 102 | 106 |

As a result of the treatment with a formulation according to the present invention, the storage life of apples has been improved, which nevertheless was dependent on the particle size of the formulations.

### Example 6

### Study of the effect of liquid formulation in winter wheat

The effect of the formulations according to the present invention was tested on the crop yield of winter wheat under small plot conditions. The test formulations were of the following composition:

**Table 11**

| Composition | Preparation 6/I [m/m%] | Preparation 6/II [m/m%] | Preparations 6/III [m/m%] |
|---|---|---|---|
| **Component "A"** (surface-treated alginite) | 10.0 | | 10.0 |
| Alginite | | 10.0 | |
| Component "B" (surface-treated rhiolite tuff) | 15.0 | 15.0 | 15.0 |
| Epoxylated-phosphated castor oil | 2.5 | 2.5 | 2.5 |
| Lignosulphonate calcium salt | 2.0 | 2.0 | 2.0 |
| Monopropylene glycol | 5.0 | 5.0 | 5.0 |
| Xanthan gum | 0.1 | 0.1 | 0.1 |
| Silicone antifoam | 1.5 | 1.5 | 1.5 |
| Carboxymethylcellulose | 0.5 | 0.5 | 0.5 |
| Ion-exchanged water | 63.4 | 63.4 | 63.4 |
| Summarize: | 100.0 | 100.0 | 100.0 |

Pretreated Alginite used in Formulations 6/I and 6/III (component "A") is produced according to the following procedure:
An aqueous solution containing 2 m/m% glycine, 2 m/m% asparagine, 2 m/m% succinic acid, 2 m/m% fumaric acid was prepared. A 10 m/m% amount of this solution calculated for the amount of component "A" was adsorbed by alginite having the particle size of 100-400 mikrons.

Treated rhiolite tuff component (component "B") was prepared by adsorbing 5 m/m% amount of 75 m/m% phosphorous acid and 2.5 % amount of 40 m/m% potassium sulphate on rhiolite tuff having the particle size of 100-400 mikrons.

The preparations were prepared by mixing component "A" in case of Preparations 6/I and 6/III or by mixing untreated alginite with component "B" in case of Preparation 6/II and homogenizing for one hour.
During this period, the silicone antifoam, epoxylated-phosphated castor oil, lignosulphonate calcium salt, monopropylene glycol, carboxymethylcellulose are added to ion-exchanged water (50%) and the mixture was homogenized using a high-shear mixer. Subsequently, while operating the mixer, the addition of the solid zeolite and alginite containing homogenate is started. The thus obtained raw suspension thus obtained was forwarded by a peristaltic pump to a dynoKLD bead mill filled up to 70% with zirconium beads having 1 mm diameter at a flow rate of 3 liter/hour. The particle size is controlled after each run of milling. In the case when the amount having higher particle size than 5µ exceeds 0.5%, the suspension is recycled. When the particle size range of 1-3 µm has been reached, the aqueous solution of xanthane gum (5%) and the remaining water are added and the suspension is homogenized by a low rpm stirrer.

### Testing of the biological effect of the formulations in winter wheat

**Table 12**

| Treatment | Dose (liter/hectare) | Crop yield | | Crude protein | |
|---|---|---|---|---|---|
| | | kg/hectare | % | absolute % | relative % |
| Untreated control | - | 4510 | 100 | 14.7 | 100 |
| Yaravita Gramitre | 5 | 4875 | 108.1 | 15.1 | 102.7 |
| Preparation 6/I | 5 | 5872 | 130.2 | 16.2 | 110.2 |
| Preparation 6/II | 5 | 5629 | 124.8 | 15.5 | 105.4 |
| Preparation 6/III | 5 | 5547 | 123.0 | 15.8 | 107.5 |

The treatments were carried out at the time of earing.
Due to an effect of the formulation according to the present invention more suitable for satisfying the genetically determined nutrient requirement of the plants, the crop yield increased in a significantly greater degree than in the case when the formulation in general widespread use in agricultural practice was applied.

### Example 7

### Preparation of soil conditioning granule formulations and investigation of their effect on the crop yield and licopine content of tomato

(Comparison of granules prepared from raw particles obtained directly from the quarry consisting of homogeneous particles of 3 to 5 mm size and granules having particle size of 3 to 5 mm prepared from 10 to 40 micron particulates.)

Raw alginite having 3 to 5mm particle size directly obtained from the quarry as well as crude phosphate are dried at 105°C white rhiolite tuff is dried at 220°C until constant weight. Subsequently an appropriate portion of dried alginite, crude phosphate and rhiolite tuff are milled to the particle size of 10 to 40 microns and the other part having the original particle size is left at the original particle size unmilled. Subsequently the nutrient solution of the following composition is prepared:

**Table 13**

| Nutrient solution "T" | |
|---|---|
| Constituents | Weight parts |
| Ion-exchanged water | 55 |
| Potassium humate | 5 |
| Monoammoniumphosphate | 20 |
| Urea | 10 |
| Carboxymethyl-cellulose sodium salt | 5 |
| Ethoxylated-propoxylated fatty alcohol block copolymer (L61 Rodia) | 3 |
| Sodium laurate | 2 |
| Total | 100 |

### Preparation 7/A

A mixture of 40 weight percent of alginite, 30 weight percent of rhiolite tuff furthermore 10 weight percent of crude phosphate having a particle size between 10 to 40 microns were dried until constant weight and was impregnated with 20 weight percent of solution "T". The formulations are dried in a fluid bed drier between 30 and 35°C until the particles cease to adhere to each other. The mixture consisting of dried alginite, rhiolite tuff, crude phosphate having particle size between 10 and 40 microns and impregnated with Solution "T" is transformed into 3-5 mm pellets by the addition of 3 weight percent of dextrin and 2 weight percent of calcium chloride.

### Preparation 7/B

The 3-5 mm fractions are mixed in the ratio according to Example 7/A, treated with Solution "T" and dried.

The biological effect of the formulations was tested in acidic sandy soil (pH 4.5; Humus percent 0.9; K_{A} 23) using tomato as test species.

**Table 14**

| Treatment number | Formulation [kg/ha] | Tomato yield | | Licopine content | |
|---|---|---|---|---|---|
| | | kg/ha | % | mg/100 g raw weight | % |
| 1. | Untreated control | 24715 | 100 | 22.7 | 100 |
| 2. | 7/A [100] | 31859 | 128.9 | 30.8 | 135.7 |
| 3. | 7/A [250] | 33266 | 134.5 | 30.9 | 136.1 |
| 4. | 7/A [750] | 39866 | 161.3 | 32.2 | 141.8 |
| 5. | 7/B [100] | 27302 | 110.3 | 24.6 | 108.4 |
| 6. | 7/B [250] | 27945 | 119.1 | 24.8 | 109.3 |
| 7. | 7/B [750] | 30258 | 122.4 | 26.9 | 118.5 |

By examining the particle size and the effect of the nutrient treatment, it can be concluded that in the case when the 3-5 mm size pellets were built up from 10-40 micron particles, the yield of tomato was 10 to 30 percent greater than in the case when the particles consisted of uniform 3-5 mmm size parts.

### Example 8

### Soil- and foliage fertilizer having extended effective period

### Detailed description of the method:

### Pretreatment of rhiolite tuff:

Rhiolite tuff having 100 to 400 mikron particle size is ignited at 225°C, by which it loses moisture (∼5.5 m/m%) and organic content (∼15.5 m/m%). To the thus obtained mineral having high sorption capacity, zinc ammonium acetate having 15 weight percent zinc content in an amount that the weight ratio of the ignited rhiolite tuff and zinc ammonium acetate is 65:35.

### Preparation of urea-formaldehyde resin:

11.43 weight part of urea are dissolved in 11.43 weight parts of ion-exchanged water and 0.11 weight part of hydrochloric acid and 10.86 weight part 95 weight part of 37% formaldehyde solution are added thereto, the mixture is stirred intensely and cooled for about 30 minutes until the condensation is completed. Subsequently 66.17 weight parts of pretreated zeolite are added. The pasty mixture is extruded and dried using a fluid bed drier at about 40°C. The particles are milled to the particle size of 5-10 microns using a Bantam mill.

From the zeolite-containing resin thus obtained, 24.7 weight parts are weighed and are added 5 weight parts of hydroxyethene-diphosphonic acid tetrasodium salt, 2.5 weight parts Genopol 0200-T (ethoxylated alcohol, Hoechst A.G. Germany), 2.5 weight parts of sodium hydrogencarbonate, 2.5 weight parts of Arkopon T-Pulver. The mixture is homogenized, and subsequently 1 weight part of 99.6 weight percent phosphorous acid powder, 20 weight parts of dried alginite milled to the particle size of 10 to 40 microns, 36.5 weight parts of ammonium sulphate and after further homogenization, the mixture is pelletized between rolling cylinders.

Biological effect of the formulation according to the present invention was investigated under field conditions in sunflower. The yield of the produce and the proportion of stalk disease was measured. Data are expressed in percentage of the untreated control.
The formulation according to the present invention has been delivered in 4.0 kg/hectare dose in the 6-pair leaf stage of sunflower and the treatment was repeated at the beginning of flowering.

**Table 15**

| **Treatments** | **Yield** | **Diaporthe** | **Sclerotinia** |
|---|---|---|---|
| Untreated control | 100 | 100 | 100 |
| Yaravital Bortrack | 116.2 | 82.6 | 85.7 |
| Formulation according to the present invention | 127.3 | 63.2 | 82.1 |

On the basis of the results, it was possible to conclude that the formulation according to the present invention not only increased the crop yield but moderated the proportion of stalk diseases originated from the soil.

### Example 9

### Preparation of organomineral pellet and investigation of the effect thereof

### Preparation 9/1:

### a.) riolittufa hökezelése:

Rhiolite tuff having an average particle size of 40 to 200 microns and having 40 weight percent zeolite content is ignited until constant weight at 250°C. After cooling, the riolite tuff burned together during ignition is broken up in a hammer mill to a particle size of 0.5-1.0 mm.

### b.) preparation of alginite suspension:

A suspension is prepared from alginite by mixing 20 weight percent of alginite powder, 2.5 weight parts of epoxylated-phosphated castor oil, 2.0 weight percent of lignosulphonate sodium salt, 2 weight percent of monopropylene glycol, 0.1 weight percent of xanthan gum, 10 weight percent of neem oil and 70.4 weight part of water as calculated for the weight of the suspension are mixed and wet-milled in a Dyno-Mill type KDL mill to a particle size of 0.5-3.0 microns.

### c.) The heat-treated rhiolite tuff is impregnated with the suspension containing alginite and neem oil in a ratio of 80 weight percent of rhiolte tuff - 20 weight percent of alginite suspension.

The product thus obtained can be used in several ways. For example, it can be packaged and sold as microgranulated fertilizer (microgranulated fertilizer Preparation 9/A).

### Preparation 9/B (organic and mineral base solid fertilizer granules)

30 weight parts of dried and powdered poultry manure, 10 weight parts of Preparation 9/1 and 20 weight parts of soft earthy crude phosphate are milled in a peg mill to particle size between 10 and 60 microns and during continous mixing, 4 weight parts of dextrin, 3 weight parts of urea-formaldehyde condensate, 1 weight part of magnesium stearate, 1 weight part of carboxymethyl-cellulose and 1 weight part of a 1:1 mixture of hydroxyanisolbutylate (BHA) and hydroxytoluenebutylate (BHT) and water required for granulation, and pellets of 3-5 mm size are produced using a basket extruder.

### Preparation 9/C:

A suspension is prepared using the impregnated rhiolite tuff according to the present invention and plant nutrients as described below.

**Table 16**

| Ingredient | Preparation 9/C [m/m%] |
|---|---|
| Ignited rhiolite tuff impregnated with alginite suspension (Preparation 9/1) | 30 |
| Urea-phosphate | 5 |
| Potassium dihydrogenphosphate | 5 |
| Xanthan gum | 0.1 |
| Glycerol | 0.1 |
| 1,2-benzoisothiazolin-3-on | 0.01 |
| 2-hydroxy-1,2,3-propentricarboxylic acid | 0.04 |
| Ion-exchanged water | 59.75 |
| Total | 100 |

Potassium phosphate and urea phosphate are dissolved in the ion-exchanged water and two-third part of the excipients and subsequently the rhiolite tuff having particle size of 10-60 microns is added. The mixture is milled in a bead mill to a particle size of 1-5 microns. The remaining part of the excipients are added and the formulation is mixed.

### Investigation of biological effect

The effect of Preparation 9/A was investigated on the corn yield and the damage caused by pupae of corn rootworm. The area of the plots were 1 hectare each. In each plot, four sampling areas were designated where the root damage was evaluated in 20 plants each. The degree of root damage has been determined by taking into account the provisions of the Hills-Petters scale, where the scale value of 1 designates the absence of damage and scale value 6 designates total destruction of roots through 3 or more nodes. Practically acceptable damage level can be characterized by scale level 3.

**Table 17**

| Treatment and dose | Level of root damage expressed as average of IOWA scale values | Crop yield (kg/ha) calculated for 14% moisture content |
|---|---|---|
| Production control | 5.24 | 8098 |
| Kentaur 5 G (Producer: Cheminova ag. Denmark) 10 kg/ha | 3.56 | 8710 |
| Preparation according to Example 9/a 10 kg/ha | 3.63 | 9124 |
| Preparation according to Example 9/a 15 kg/ha | 3.17 | 9233 |
| Preparation according to Example 9/a 20 kg/ha | 3.06 | 9729 |

As a result of the plant conditioning effect of the microgranulated preparation according to the present invention as well as the prolonged effective period of the protective plant protection chemicals, the damage caused by corn rootworm was smaller and the crop yield was greater than in the case of the production control.

### Example 10

### Preparation of gel products and investigation of the effect thereof

Preparation 10/A (surface-treated rhiolite tuff):

**Table 18**

| Composition | Preparation 10/A[m/m%] |
|---|---|
| Ignited rhiolite tuff particle size 15-40 microns | 15 |
| Mixture of polyoxyethylene hydrogenated castor oil and fatty acid polymers | 12.55 |
| Bentonit alkylamino complex | 2.45 |
| Rapeseed oil | 70 |
| Total | 100 |

The components are mixed and the mixture is milled by wet-milling for 30 minutes to the particle size of 1-5 microns.

Preparation 10/B (surface-treated alginite):

**Table 19**

| Composition | Formulation 10/B [m/m%] |
|---|---|
| Dried alginite particle size 10-40 micron | 15 |
| 3.5-dibromo-4-hydroxy-benzonitril-octylester | 25 |
| Bentonit alkylamino complex | 1.5 |
| Mixture of polyoxyethylene-nonylphenylether-dialkyl-sulphosuccinate, polyoxyethylene hydrogenated castor oil and fatty acid polymers | 11 |
| Sunflower oil | 47.5 |
| Total | 100 |

The components are mixed and the mixture is wet-milled for 30 minutes to obtain a particle size of 1-5 microns.

Formulation 10/C (mixture containing treated alginite and zeolite):

**Table 20**

| Composition: | Preparation 10/C [m/m%] |
|---|---|
| Dried alginite particle size 10-40 microns | 7.5 |
| 3.5-dibromo-4-hydroxy-benzonitrile-octylester | 12.5 |
| Bentonit alkylamino complex | 1.975 |
| Mixture of polyoxyethylene-nonylphenylether dialkyl-sulphosuccinate, polyoxyethylene hydrogenated castor oil and fatty acid polymers | 11.775 |
| Ignited rhiolite tuff particle size 15-40 microns | 7.5 |
| Plant oil | 58.75 |
| Total | 100 |

### Preparation 10/D (gel forming material)

The mixture of disodium oxalate (24.7 weight percent), octylsulphosuccinate (68.4 weight percent and sodium benzoate (6.9 weight percent) and corn oil are mixed in a ratio of 1:1 and the mixture is kept for 30 minutes at 180°C, then used, cooled and the gel forming formulation 10/D is obtained.

**10/I Gel formulation containing surface-treated zeolite and surface-treated alginite**

60 weight percent of Formulation 10/C and 40 weight percent of Formulation 10/D are stirred at 80°C for 5 minutes, cooled down and the gel formulation according to the present invention is obtained.

**Table 21**

| Composition | Formulation 10/I [m/m%] |
|---|---|
| Alginite dried particle size 10-40 microns | 4.5 |
| Ignited rhiolite tuff particle size 15-40 microns | 4.5 |
| 3.5-dibromo-4-hydroxy-benzonitrile-octylester | 7.5 |
| Bentonit alkylamino complex | 1.185 |
| Mixture of polyoxyethylene-nonylphenylethen dialkylsulphosuccinate, polyoxyethylene-hydrogenated castor oil and fatty acid polymers. | 7.065 |
| Sodium benzoate | 1.38 |
| Disodium oxalate | 4.94 |
| Octyl sulphosuccinate | 13.68 |
| Vegetable oil (mixture of rapeseed, sunflower and corn oils in the ratio of 1.75:1.1875:1) | 55.25 |
| Total | 100 |

### Investigation of the effect of Preparation 10/I in winter wheat

Winter wheat was treated with the formulation according to the present invention twice in the vegetative period. Treatments were carried out at the end of tillering and in the beginning of flowering at a dose of 10 1/ha and 5 1/ha. As a standard control, Wuxal Super (Aglukon Spezialdunger GmBH. and Co. K. J. Germany) was used in similar dose and period of vegetation. Crop yield and microelement content was measured. Results are given as a percentage of untreated control.

**Table 22**

| Treatment | Dose (l/ha) | Crop yield (%) | Iron (Fe) | Manganese (Mn) | Copper (Cu) | Zinc (Zn) | Molybdenum (Mo) | Boron(B) |
|---|---|---|---|---|---|---|---|---|
| Untreated control | - | 100 | 100 | 100 | 100 | 100 | 100 | 100 |
| Wuxal super | 5+5 | 103.5 | 100.2 | 98.7 | 94.5 | 96.9 | 113.1 | 100.5 |
| Wuxal super | 10+10 | 109.7 | 103.2 | 100.7 | 102.5 | 103.4 | 122.8 | 106.1 |
| Formulation 10/I. | 5+5 | 113.1 | 103.6 | 107.8 | 104.3 | 102.8 | 143.1 | 104.9 |
| Formulation 10/I. | 10+10 | 142.2 | 107.9 | 112.3 | 105.9 | 116.2 | 166.3 | 118.5 |

As an effect of the richer microelement content of the formulation according to the present invention, the crop yield and the microelement content of the crop was higher than that of the standard control.

### Example 11

### Granule formulations having biologically and economically optimal composition

The effect of preparations according to the present invention having different compositions on the crop yield and the return of investment in the case of formulations having different composition has been investigated. According to our investigations, these indicators mainly depended on the organic and mineral colloid content of the soil. In soils of loose structure having low organic and clay colloid content, the optimal composition of the solid granule formulation according to the present was the following:

| | |
|---|---|
| monoammonium phosphate (200-400 µm) | 25.0 m/m% |
| Rhiolite tuff (surface-treated with 5 m/m% of 75 m/m% phosphoric acid) (200-400 µm) | 15.0 m/m% |
| Alginite (200-400 µm) | 20.0 m/m% |
| Air-dry poultry manure (200-400 µm) | 20.0 m/m% |
| MONATROP 1620 (C₈-C₁₀ nonionic alkyl polyglycoside) | 5.0 m/m% |
| (Manufacturer: CRODA) | |
| Potassium chloride | 10.0 m/m% |
| Calcium lignosulphonate (Borressperse Ca). | 2.0 m/m% |
| (Manufacturer: Borregaard LignoTech) | |
| Caolin | 3.0 m/m% |

In case of highly bound clay soils and in soils rich in organic colloids the use of the granules according to the present invention having the following composition was the most effective:

| | |
|---|---|
| Monoammoniumphosphate (1-100 µm) | 30.0 m/m% |
| Rhiolit tuff (1-100 µm) | 25.0 m/m% |
| (surface treated with 10 m/m% Amalgerol Prémium soil conditioning formulation) | |
| (Manufacturer: HECHENBICHLER GmbH, Austria) | |
| Alginite (1-100 µm) | 20.0 m/m% |
| MONATROP 1620 (C₈-C₁₀ nonionic alky-polyglycoside) | 10.0 m/m% |
| (Manufacturer: CRODA) | |
| Zinc sulphate monohydrate | 4.0 m/m% |
| Caolin | 5.0 m/m% |
| Calcium-lignosulphonate (Borressperse Ca) | 2.0 m/m% |
| (Manufacturer: Borregaard LignoTech) | |
| Calcium-chloride | 2.0 m/m% |
| Potassium humate | 2.0 m/m% |

In the case of medium-bound, loamy field soil the use of the granules according to the present invention having the following composition was the most effective:

| | |
|---|---|
| Monoammoniumphosphate (100-200 µm) | 70.0 m/m% |
| Rhiolite tuff (100-200 µm) | 10.0 m/m% |
| Alginite (100-200 µm) | 10.0 m/m% |
| Zinc sulphate monohydrate | 3.0 m/m% |
| Ammonium molybdate | 1.0 m/m% |
| Caolin | 4.0 m/m% |
| Magnesium lignosulphonate (LIQUOL BV 18) | 2.0 m/m% |
| (Manufacturer: BASF) | |

During the manufacturing of the granulated preparations, one can proceed by milling monoammoniumphosphate, alginite, rhiolite tuff and optionally poultry manure to the desired uniform average particle size and homogenizing in a Lödige mixer.

To the mixture thus obtained are added zinc sulphate monohydrate, molybdenum, cobalt or copper contaning salt, potassium chloride, the liquid soil conditioning formulation (for example, Amalgerol Prémium and/or C₈-C₁₀ nonionic alkyl-polyglycoside), lignosulphonate calcium and/or magnesium salt and 0-5 weight percent of water calculated for the weight of the mixture and the thus obtained mixture is extruded using an APV-LM 50 type double screw extruder at 70°C jacket temperature using 1 mm hole size. The extrudate exiting is subjected to short cooling and drying and transferred into a spheronizer operated at 1500 rpm where it is broken up to 0.1-2.0 mm size rods. The fraction having the size of 0.4 to 1.2 mm is separated and packaged, the fractions smaller than 0.4 mm or greater than 1.2 mm are recycled to the start of the process.

### Example 12

### Liquid formulations having biologically and economically optimal composition

The composition of a formulation according to the present invention which can be used economically and effectively in irrigation agriculture:

| | |
|---|---|
| Zeolit containing rhiolite tuff | 5 m/m% |
| Alginite | 15 m/m% |
| Urea-formaldehyde condensate | 10 m/m% |
| MONATROP 1620 (C₈-C₁₀ nonionic alkyl polyglycoside) | 10.0 m/m% |
| (Manufacturer: CRODA) | |
| Short chain polysaccharide (laminarint) | 5 m/m% |
| Potassium humate | 2 m/m% |
| Ethoxylated-phosphate tristyrylphenol | 2.5 m/m% |
| Ethoxylated-phosphated castor oil | 0.75 m/m% |
| Lignosulphonate sodium salt | 2.5 m/m% |
| Monopropylene glycol | 5 m/m% |
| Silicone antifoam | 1 m/m% |
| Xanthan gum | 0.1 m/m% |
| Sodium benzoate | 0.15 m/m% |
| Ion-exchanged water | 41 m/m% |

In an autoclave equipped with heating-cooling jacket, while continously stirring, the sodium benzoae, lignosulphonate sodium salt, ethoxylated-phosphated tristyryl phenol, castor oil and propylene glycol are dissolved in ion-exchanged water. Subsequently the zeolite containing rhiolite tuff, alginite, urea-formaldehyde resin and polyglycoside mixture and potassium humate are added. After suspending the active ingredients uniformly, the suspension is stabilized using silicone antifoam and xanthan gum. Subsequently the product is milled in several steps to a particle size preferably between 1 and 10 microns using a Dyno KD type bead mill. The
milled suspension is filtered and packaged.

## Claims

1. Soil conditioning preparation containing alginite and zeolite, **characterized by** that the average particle size of the zeolite and alginite components of the preparation is between 0.05 and 500 µm.

2. Preparation according to claim 1, **characterized by** that the average particle size of the alginite and zeolite used therein is between 0.05 and 100 µm, preferably between 0.05 to 40 µm, the most preferably between 1 to 10 µm.

3. The preparation according to claim 1 or claim 2, **characterized by** that the preparation contains further excipients, preferably surfactants.

4. Preparation according to claims 1-3, **characterized by** that the preparation contains as surfactant an ionic and/or nonionic surfactant, as ionic surfactant, a cationic or anionic surfactant or a mixture thereof.

5. Preparation according to claims 1-4, **characterized by** that the preparation can contain as a nonionic surfactant, for example, fatty alcohols, such as cetylalcohol, stearyl alcohol, polyoxyethylene glycols and alkylethers thereof, for example, octaethyleneglycol mono-dodecylether, pentaethylene glyol monododecylether, alkyl ethers of polyethylene glycol or glycoside ethers, such as decyl-glycoside, lauryl glycoside, octyl glycoside, alkylpolyglycoside, polyoxyethylene octyl phenyl ether (Triton X-100), polyoxyethyleneglycol-alkylphenolethers, for example, Nonoxynol-9, glicerol esters, such as glycerol laurate, polysorbates, sorbitan alkylesters, polyethyleneglycol-polypropylene glycols (poloxamers).

6. Preparation according to claims 1-5, **characterized by** that as ionic surfactant, it contains preferably anionic surfactants, as anionic surfactant, for example carboxymethyl cellulose sodium having an etherification degree of 60-80% and molecular weight of 1-5*10³, an anionic derivative of alkyl polyglycoside, alkyl sulphates, for example ammonium lauryl sulphate, sodium laurylsulphate, sulphonates, such as for example, dioctyl sulphosuccinate, alkylbenzene sulfonates, phosphonates, for example, aryl alkyl phosphonates, alkylether phosphonates, carboxylates, such as, for example, fatty acid salts, like sodium stearate, preferably an anionic derivative of an alkyl polyglycoside of the general Formula [R-O-(G)ₓ]ₙ-(D)_{y} (I.) where in the general Formula (I.) :
R = saturated or unsaturated, straight or branched C₆₋₂₀, preferably C₈₋₁₆ carbon number aliphatic group,
G = reduced sugar residue, preferably glucose residue, which is bound through the R-O bond to other O-glycoside group,
O = oxygen atom
D = acyl residue of a polycarboxylic acid in salt form;
can contain as cationic surfactant for example, quaternary ammonium salts, for example, cetyltrimethylammonium bromide, cetyltrimethylammonium chloride.

7. Preparation according to claims 1-5, **characterized by** that the preparation contains as a zeolite component, a heat treated zeolite or a zeolite treated with an organic and/or inorganic acid.

8. Preparation according to any of claims 1 to 6, **characterized by** that the preparation contains further plant nutrients and excipients.

9. Preparation according to any of claims 1 to 7, **characterized in that** the preparation further contains fatty acids, preferably caprylic acid, pelargonic acid, caprynic acid or laurylic acid or mixtures thereof.

10. The preparation according to any of claim 1 to 9, **characterized by** that the preparation further contains crude phosphate or monoammoniumphosphate as plant nutrient.

11. The preparation according to claims 1 to 10, **characterized by** that the preparation contains heat treated zeolite.

12. The preparation according to any of claims 1 to 10, **characterized by** that the preparation contains zeolite treated with an organic acid, preferably malonic acid, fumaric acid, succinic acid, formic acid, acetic acid, benzenesulphonic acid, paratoluenesulphonic acid, methanesulphonic acid and/or with an inorganic acid, preferably with phosphoric acid, hydrochloric acid, boric acid, hydrogen iodide, nitric acid, sulphuric acid, preferably with phosphoric acid.

13. The preparation according to any of claims 1 to 12, **characterized by** that the weight ratio of the zeolite and alginite components in the preparation to each other is between 50:1 and 1:50, preferably between 20:1 to 1:20, more preferably, between 5:1 and 1:5.

14. The preparation according to any of claims 1 to 13, **characterized by** that the preparation is presented in solid form, preferably as powder or granules or in liquid form, preferably as suspension or suspemulsion.

15. The preparation accordig to any of claims 1 to 14, **characterized by** that the preparation contains as calculated on the basis of the weight of the preparation, 5 to 35 weight percent, preferably 10 to 30 weight percent of rhiolite tuff, which rhiolite tuff is untreated, optionally ignited and/or pretreated preferably with phosphoric acid or Amalgerol premium, 5 to 35 weight percent, preferably 10 to 30 weight percent of alginite, 1 to 15 weight percent, preferably 2 to 10 weight percent of ionic surfactant, for example, lignosulphonates, such for example, calcium or magnesium lignosulphonates and/or 1 to 15 weight percent, preferably 2 to 10 weight percent of nonionic surfactants, such as for example, alkyl-polyglycosides and optionally organic and inorganic plant nutrients, plant protection chemicals and excipients.

16. The preparation according to claims 14 or 15, in the form of granules which are made up by particles having average particle size between 0.05 to 500 µm, prefeably between 0.05 and 100 µm, more preferably between 0.05 and 40 µm, the most preferably between 1 and 10 µm and by that the granules contain on the basis of the weight of the preparation 10 to 80 weight percent, preferably 30 to 70 weight percent of monoammoniumphosphate, 5 to 40 weight percent, preferably 10 to 30 weight percent of rhiolite tuff and 5 to 40 weight percent, preferably 10 to 30 weight percent of alginite and optionally 5 to 30 weight percent, preferably 10 to 20 weight percent of poultry manure, 0.01 to 10 weight percent, preferably 1 to 6 weight percent of zinc sulphate monohydrate, 0.01 to 2 weight percent, preferably 0.1 to 1 weight percent of molybdenum, cobalt and/or copper containing salt, 0.01 to 15 weight percent, preferably 0.1 to 10 weight percent of potassium chloride, 0.01 to 30 weight percent, preferably 0.1 to 20 weight percent of liquid soil conditioning preparation, preferably of Amalgerol Premium and/or C₈-C₁₀ nonionic alkyl-polyglycoside, 0.01 to 5 weight percent of lignosulphonate calcium and/or magnesium salt, 0.01 to 5 weight percent, preferably 1 to 3 weight percent of calcium chloride, 0.01 to 5 weight percent, preferably 1 to 3 weight percent of potassium humate and 0 to 5 weight percent of water.

17. The preparation according to claim 14 or claim 15 in the form of a suspension, wherein the average particle size of the solid particles of the suspension is between 1 and 10 µm and by that the suspension contains as calculated on the basis of the weight of the preparation 2 to 10 weight percent, preferably 4 to 6 weight percent of zeolite containing rhiolite tuff, 5 to 30 weight percent, preferably 10 to 20 weight percent of alginite, 5 to 20 weight percent, preferably 8 to 16 weight percent of urea-formaldehyde condensate, 5 to 20 weight percent, preferably 8 to 16 weight percent of C₈-C₁₀ nonionic alkyl-polyglycoside, 1 to 10 weight percent, preferably 2 to 7 weight percent of short chain polysaccharide, 1 to 5 weight percent, preferably 2 to 3 weight percent of potassium humate, 1 to 5 weight percent, preferably 2 to 3 weight percent of ethoxylated-phosphated tristyrylphenol, 0.1 to 3 weight percent, preferably 0.5 to 1 weight percent of ethoxylated-phosphated castor oil, optionally 0.01 to 5 weight percent, preferably 0.5 to 2 weight percent of lignosulphonate sodium salt, 1 to 10 weight percent, preferaby 2 to 7 weight percent of monopropylene glycol, optionally 0.01 to 1 weight percent, preferably 0.5 to 1.5 weight percent of silicone antifoam and/or 0.01 to 1 weight percent, preferably 0.05 to 1.5 weight percent of xanthan gum, 0.05 to 1 weight percent, preferably 0.05 to 1.5 weight percent of sodium benzoate and 30 to 60 weight percent, preferably 35 to 45 weight percent of water.

18. Method for the preparation of alginite and zeolite containing soil conditioning preparation, **characterized by** that
a.) the alginite and zeolite are mixed and either in themselves or with the addition of further excipients, preferably surfactants are milled in known manner to the average particle size of 0.05 to 500 µm, or
b.) the alginite and zeolite separately are milled to the particle size of 0.05 to 500 µm, optionally with the addition of further excipients, preferably surfactants, or
c.) the zeolite is milled individually to an average particle size between 0.05 and 500 µm, impregnated with a suspension containing alginite having an average particle size between 0.05 and 500 µm and optionally admixing further excipients, preferably surfactants,
and if desired, the thus obtained milled mixture is transformed into a suspension, emulsion, pellet or granule in known manner.

19. Method according to claim 18, **characterized by** that the alginite and zeolite used are milled to an average particle size between 0.05 and 100 µm, preferably 0.05 to 40 µm, the most preferably 0.1 to 10 µm.

20. Method according to claim 18 or 19, **characterized by** that as surfactant, 0.1 to 15 weight percent, preferably 1-10 weight percent of ionic and/or nonionic surfactant, as ionic surfactant, anionic or cationic surfactants or mixtures thereof is used where the nonionic surfactant is for example a fatty alcohol such as cetyl alcohol, stearyl alcohol, polyoxyethylene glycols and alkylethers thereof, such as for example octaethyleneglycol monododecylether, pentaethyleneglycol monododecylether, alkylethers of polypropyleneglycol, glycoside ethers such as decyl-glycoside, lauryl glycoside, octyl-glycoside, alkyl-polyglycoside, polyoxyethylene octylphenyl ether (Triton X-100), polyoxyethyleneglycol alkylphenol ethers, for example Nonoxinol-9, glycerol esters, such as for example glycerol laurate, polysorbate, sorbitane alkylesters, polyethyleneglycol-polypropylene glycols (poloxamers).

21. Method according to claims 18-20, wherein the preparation is in the form of granules comprising 10 to 80 weight percent, preferably 30 to 70 weight percent of monoammoniumphosphate, 5 to 40 weight percent, preferably 10 to 30 weight percent of rhiolite tuff and 5 to 40 weight percent, preferably 10 to 30 weight percent of alginite calculated on the basis of the weight of the preparation and optionally 5 to 30 weight percent, preferably 10 to 20 weight percent of poultry manure are milled to the average particle size between 0.05 and 500 µm, preferably between 0.05 to 100 µm, more preferably between 0.05 to 40 µm, the most preferably 1-10 µm, homogenizing and optionally admixing 0.01 to 10 weight percent, preferably 1 to 6 weight percent of zinc sulphate monohydrate, 0.01 to 2 weight percent, preferably 0.1 to 1 weight percent of molybdenum, cobalt, copper containing salt, 0.01 to 15 weight percent, preferably 0.1 to 10 weight percent of potassium chloride, 0.01 to 30 weight percent, preferably 0.1-20 weight percent of liquid soil conditioning preparation (for example, Amalgerol Prémium and/or C₈₋C₁₀ nonionic alkyl polyglycoside), 0.01 to 5 weight percent of lignosulphonate calcium and/or magnesium salt, 0.01 to 5 weight percent, preferably 1 to 3 weight of percent calcium chloride, 0.01 to 5 weight percent, preferably 1 to 3 weight percent of potassium humate and balance water yielding water content between 0 and 5 weight percent, pushing the mixture using 1 mm hole size in an extruder at a temperature between 20 and 100 ºC, preferably between 50 and 100 ºC, the most preferably between 60 and 80 ºC, transferring the exiting extrudates after short cooling and drying into a spheroniser, breaking up the extrudates in a spheroniser into rods having 0.1 to 2 .0 mm size and if desired, separating the 0.4 to 1.2 mm size fraction using a vibrating sieve.

22. Method according to any of claims 18 to 20, wherein the preparation is in the form of a suspension which comprises dissolving in 30 to 60 weight percent, preferably in 35 to 45 weight percent of water as calculated on the basis of the weight of the preparation 0.05 to 1 weight percent, preferably 0.05 to 1.5 weight percent of sodium benzoate, 1 to 5 weight percent, preferably 2-3 weight percent of ethoxylated-phosphated tristyrylphenol, 0.1 to 3 weight percent, preferably 0.5-1 weight percent of ethoxylated-phosphated castor oil and 1 to 10 weight percent, preferably 2-7 weight percent of monopropylene glycol, optionally 0.01 to 5 weight percent, preferably 0.5-2 weight percent of lignosulphonate sodium salt, and adding to the thus obtained solution as calculated on the weight of the preparation, 2 to 10 percent, preferably 4-6 weight percent of zeolite containing rhiolite tuff, 5 to 30 weight percent, preferably 10-20 percent of alginite, 5 to 20 weight percent, preferably 8-16 weight percent of urea-formaldehyde condensate, 5 to 20 weight percent, preferably 8-16 weight percent of C₈₋C₁₀ nonionic alkyl polyglycoside and 1 to 10 weight percent, preferably 2 to 7 percent of short chain polysaccharide mixture and subsequently 1 to 5 weight percent, preferably 2-3 weight percent of potassium humate, suspending the thus obtained mixture uniformly and if desired, stabilizing the suspension by adding 0.01 to 1 weight percent, preferably 0.5-1.5 weight percent of silicone antifoam and/or 0.01-1 weight percent, preferably 0.05 to 1.5 weight percent of xanthan gum and subsequently milling to the average particle size between 1 and 10 microns and if desired, filtering and packaging.

## Patentansprüche

1. Präparat zur Bodenverbesserung enthaltend Alginit und Zeolith, **dadurch gekennzeichnet, dass** die durchschnittliche Partikelgröße der Zeolith und Alginith-Komponenten des Präparats zwischen 0,05 und 500 µm ist.

2. Präparat gemäß Anspruch 1, **gekennzeichnet dadurch, dass** die durchschnittliche Partikelgröße des darin verwendeten Alginits und Zeoliths zwischen 0,05 und 100 µm ist, vorzugsweise zwischen 0,05 und 40 µm, am meisten bevorzugt zwischen 1 und 10 µm.

3. Präparat gemäß Anspruch 1 oder 2, **dadurch gekennzeichnet, dass** das Präparat weitere Hilfsstoffe enthält, vorzugsweise Tenside.

4. Präparat gemäß einem der Ansprüche 1-3, **dadurch gekennzeichnet, dass** das Präparat als Tensid ein ionisches und/oder nichtionisches Tensid, als ionisches Tensid ein kationisches oder anionisches Tensid oder ein Gemisch davon enthält.

5. Präparat gemäß einem der Ansprüche 1-4, **dadurch gekennzeichnet, dass** das Präparat als nichtionisches Tensid zum Beispiel Fettalkohole wie Cetylalkohol, Stearylalkohol, Polyoxyethylenglycole und Alkylether davon, zum Beispiel Octaethyleneglycol-Mono-Dodecylether, Pentaethylene-glyol-monododecylether, Alkylether von Polyethyleneglycol oder Glycosidether, wie Decylglycosid, Laurylglycosid, Octylglycosid, Alkylpolyglycosid, Polyoxyethylen-octyl-phenyl-ether (Triton X-100), Polyoxyethylenglycol-alkylphenolether, zum Beispiel Nonoxynol-9, Glycerolester wie Glycerollaurat, Polysorbate, Sorbitan-alkylester, Polyethylenglycol-polypropylenglycole (Poloxamere) enthalten kann.

6. Präparat gemäß einem der Ansprüche 1-5, **dadurch gekennzeichnet, dass** es als ionisches Tensid vorzugsweise anionische Tenside, als anionisches Tensid zum Beispiel Carboxymethyl-Cellulose-Natrium mit einem Etherifizierungsgrad von 60-80% und einem Molekulargewicht von 1-5*10³, ein anionisches Derivat eines Alkylpolyglycosids, Alkylsulphate, zum Beispiel Ammoniumlaurylsulphat, Natriumllaurylsulphat, Sulphonate wie zum Beispiel Dioctyl-sulphosuccinat, Alkylbenzensulfonate, Phosphonate, zum Beispiel Aryl-alkyl-phosphonate, Alkylether-phosphonate, Carboxylate, wie zum Beispiel Salze von Fettsäuren wie Natriumstearat, vorzugsweise ein anionisches Derivat eines Alkylpolyglycosids der allgemeinen Formel [R-O-(G)ₓ]ₙ-(D)_{y} (I.) wo in der allgemeinen Formel (I.):
R = gesättigte oder ungesättigte, gerade oder verzweigte C₆₋₂₀, vorzugsweise C₈₋₁₆ Kohlenstoffanzahl aliphatische Gruppe,
G = reduzierter Zuckerrest, vorzugsweise Glucoserest, der über die R-O-Bindung an die andere O-Glycosid-Gruppe gebunden ist,
O = Sauerstoffatom
D = Acylrest einer Polycarboxylsäure in Salzform;
als kationisches Tensid zum Beispiel quaternäre Ammoniumsalze, zum Beispiel Cetyltrimethylammonium-bromid, Cetyltrimethylammonium-chlorid enthalten kann.

7. Präparat gemäß einem der Ansprüche 1-5, **dadurch gekennzeichnet, dass** das Präparat als Zeolith-Komponente ein hitzebehandeltes Zeolith oder ein Zeolith behandelt mit einer organischen und/oder anorganischen Säure enthält.

8. Präparat gemäß einem der Ansprüche 1-6, **dadurch gekennzeichnet, dass** das Präparat weitere Pflanzennährstoffe und Hilfsstoffe enthält.

9. Präparat gemäß einem der Ansprüche 1-7, **dadurch gekennzeichnet, dass** das Präparat weiter Fettsäuren enthält, vorzugsweise Caprylsäure, Pelargonsäure, Caprinsäure oder Laurinsäure oder Gemische davon.

10. Präparat gemäß einem der Ansprüche 1-9, **dadurch gekennzeichnet, dass** das Präparat weiter unbehandeltes Phosphat oder Monoammoniumsphosphat als Pflanzennährstoffe enthält.

11. Präparat gemäß einem der Ansprüche 1-10, **dadurch gekennzeichnet, dass** das Präparat als Zeolith-Komponente ein hitzebehandeltes Zeolith enthält.

12. Präparat gemäß einem der Ansprüche 1-10, **dadurch gekennzeichnet, dass** das Präparat Zeolith enthält, das mit einer organischen Säure behandelt wurde, vorzugsweise mit Malonsäure, Fumarsäure, Succinsäure, Ameisensäure, Essigsäure, Benzensulphonsäure, para-Toluensulphonsäure, Methansulphonsäure und/oder mit einer anorganischen Säure, vorzugsweise mit Phosphorsäure, Salzsäure, Borsäure, Wassserstoffiodid, Salpetersäure, Schwefelsäure, vorzugsweise mit Phosphorsäure.

13. Präparat gemäß einem der Ansprüche 1-12, **dadurch gekennzeichnet, dass** das Gewichtsverhältnis der Zeolith- und die Alginit-Komponenten in dem Präparat zueinander zwischen 50:1 und 1:50 ist, vorzugsweise zwischen 20:1 und 1:20, bevorzugter zwischen 5:1 und 1:5 ist.

14. Präparat gemäß einem der Ansprüche 1-13, **dadurch gekennzeichnet, dass** Präparat in fester Form dargeboten wird, vorzugsweise als Pulver oder Granulat oder in flüssiger Form, vorzugsweise als Suspension oder Suspemulsion.

15. Präparat gemäß einem der Ansprüche 1-14, **dadurch gekennzeichnet, dass** das Präparat wie berechnet auf der Basis des Gewichts des Präparats 5-35 Gewichtsprozent, vorzugsweise 10-30 Gewichtsprozent Riolith-Tuff enthält, wobei der Rhiolith-Tuff unbehandelt, optional abgebrannt, und/oder vorzugsweise vorbehandelt mit Phosphorsäure oder Amalgerol premium ist, 5-35 Gewichtsprozent, vorzugsweise 10-30 Gewichtsprozent Alginit, 1-15 Gewichtsprozent, vorzugsweise 2-10 Gewichtsprozent ionisches Tensid, zum Beispiel Lignosulphonate, wie zum Beispiel Kalzium- oder Magnesium-Lignosulphonat, und/oder 1-15 Gewichtsprozent, vorzugsweise 2-10 Gewichtsprozent nichtionisches Tensid, wie zum Alkylpolyglycoside, und optional organische und anorganische Pflanzennährstoffe, Pflanzenschutzstoffe und Hilfsstoffe enthält.

16. Präparat gemäß Anspruch 14 oder 15, in Form von Granulat, welches aus Partikeln besteht, die eine durchschnittliche Partikelgröße zwischen 0,05 bis 500 µm, vorzugsweise zwischen 0,05 und 100 µm, bevorzugter zwischen 0,05 und 40 µm, am meisten bevorzugt zwischen 1 und 10 µm haben und wobei das Granulat auf der Basis des Gewichts des Präparats 10-80 Gewichtsprozent, vorzugsweise 30-70 Gewichtsprozent Monoammoniumphosphat, 5-40 Gewichtsprozent, vorzugsweise 10-30 Gewichtsprozent Rhiolith-Tuff und 50-70 Gewichtsprozent, vorzugsweise 10-30 Gewichtsprozent Alginit und optional 5-30 Gewichtsprozent, vorzugsweise 10-20 Gewichtsprozent Geflügelmist, 0,01-10 Gewichtsprozent,
vorzugsweise 1-6 Gewichtsprozent Zinksulfat-Monohydrats, 0,01-2 Gewichtsprozent, vorzugsweise 0,1-1 Gewichtsprozent Molybdän, Kobalt und/oder Kupfer enthaltendes Salz, 0,01-15 Gewichtsprozent, vorzugsweise 0,1-10 Gewichtsprozent von Kaliumchlorid, 0,01-30 Gewichtsprozent, vorzugsweise 0,1-20 Gewichtsprozent eines flüssigen Bodenverbesserungspräparats, vorzugsweise Amalgerol Premium und/oder C₈₋₁₀ nichtionisches Alkylpolyglycosid, 0,01-5 Gewichtsprozent Lignosulphonat-Kalzium- und/oder Magnesiumsalz, 0,01-5 Gewichtsprozent, vorzugsweise 1-3 Gewichtsprozent Kalziumchlorid, 0,01-5 Gewichtsprozent, vorzugsweise 1-3 Gewichtsprozent Kalium-Huminat und 0-5 Gewichtsprozent Wasser enthält.

17. Präparat gemäß Anspruch 14 oder 15 in Form einer Suspension, wobei die durchschnittliche Partikelgröße der festen Partikel der Suspension zwischen 1 und 10 µm ist und wobei die Suspension wie berechnet auf der Basis des Gewichts des Präparats 2-10 Gewichtsprozent, vorzugsweise 4-6 Gewichtsprozent Zeolith enthaltendem Rhiolith-Tuff, 5-30 Gewichtsprozent, vorzugsweise 10-20 Gewichtsprozent Alginit, 5-20 Gewichtsprozent, vorzugsweise 8-16 Gewichtsprozent Harnstoff-Formaldehyd-Kondensat, 5-20 Gewichtsprozent, vorzugsweise 8-16 Gewichtsprozent C₈₋C₁₀ nichtionisches Alkylpolyglycosid,1-10 Gewichtsprozent, vorzugsweise 2-7 Gewichtsprozent kurzkettiges Polysaccharid, 1-5 Gewichtsprozent, vorzugsweise 2-3 Gewichtsprozent Kalium-Huminat, 1-5 Gewichtsprozent, vorzugsweise 2-3 Gewichtsprozent ethoxyliertes-phosphatiertes Tristyrylphenol, 0,1-3 Gewichtsprozent, vorzugsweise 0,5-1 Gewichtsprozent ethoxyliertes-phosphatiertes Rizinusöl, optional 0,01-5 Gewichtsprozent, vorzugsweise 0,5-2 Gewichtsprozent Lignosulphonat-Natriumsalz, 1-10 Gewichtsprozent, vorzugsweise 2-7 Gewichtsprozent Monopropylen-Glycol, optional 0,01-1 Gewichtsprozent, vorzugsweise 0,5-1,5 Gewichtsprozent Silikon-Antischaum und/oder 0,01-1 Gewichtsprozent, vorzugsweise 0,05-1,5 Gewichtsprozent Xanthan, 0,05-1 Gewichtsprozent, vorzugsweise 0,05-1,5 Gewichtsprozent Natrium-Benzoat und 30-60 Gewichtsprozent, vorzugsweise 35-45 Gewichtsprozent Wasser enthält.

18. Verfahren zur Herstellung eines Alginit und Zeolith enthaltenden Bodenverbesserungspräparats, **dadurch gekennzeichnet, dass**
a.) das Alginit und Zeolith miteinander vermischt werden und entweder in sich selbst oder unter Beifügung von weiteren Hilfsstoffen, vorzugsweise Tensiden, in bekannter Weise zu einer durchschnittlichen Partikelgröße von 0,05 bis 500 µm gemahlen werden, oder
b.) das Alginit und Zeolith getrennt zu einer Partikelgröße von 0,05 bis 500 µm gemahlen werden, optional unter Beifügung von weiteren Hilfsstoffen, vorzugsweise Tensiden, oder
c.) das Zeolith einzeln zu einer durchschnittlichen Partikelgröße zwischen 0,05 und 500 µm gemahlen wird, mit einer Suspension, die Alginit enthält, das eine durchschnittliche Partikelgröße zwischen 0,05 und 500 µm hat, imprägniert wird und optional Beimischen weiterer Hilfsstoffe, vorzugsweise Tenside,
und falls gewünscht, das so erhaltene Gemisch auf bekannte Weise in eine Suspension, eine Emulsion, ein Pellet, oder ein Granulat umgewandelt wird.

19. Verfahren gemäß Anspruch 18, **dadurch gekennzeichnet, dass** das verwendete Alginit und Zeolith zur einer durchschnittlichen Partikelgröße zwischen 0,05 und 100 µm, vorzugsweise 0,05 bis 40 µm, am meisten bevorzugt 0,1 bis 10 µm gemahlen werden.

20. Verfahren gemäß Anspruch 18 oder 19, **dadurch gekennzeichnet, dass** als Tensid 0,1-15 Gewichtsprozent, vorzugsweise 1-10 Gewichtsprozent eines ionischen und/oder nichtionischen Tensids, als ionisches Tensid anionische oder kationische Tenside oder Gemische davon verwendet werden, wobei das nichtionische Tensid zum Beispiel ein Fettalkohol wie Cetylalkohol, Stearylalkohol, Polyoxyethylenglycol und Alkylether davon, zum Beispiel Octaethylenglycol, Mono-Dodecylether, Pentaethylene-glyol-monododecylether, Alkylether von Polyethylenglycol oder Glycosidether wie Decylglycosid, Laurylglycosid, Octylglycosid, Alkylpolyglycosid, Polyoxyethylen-octyl-phenyl-ether (Triton X-100), Polyoxyethyleneglycol-alkylphenolether, zum Beispiel Nonoxynol-9, Glycerolester wie zum Beispiel Glycerollaurat, Polysorbate, Sorbitan-alkylester, Polyethyleneglycol-polypropylen glycole (Poloxamere) ist.

21. Verfahren gemäß einem der Ansprüche 18-20, wobei das Präparat in Form von Granulat ist, umfassend: 10-80 Gewichtsprozent, vorzugsweise 30-70 Gewichtsprozent Mono-Ammoniumsphosphat, 5-40 Gewichtsprozent, vorzugsweise 10-30 Gewichtsprozent Rhiolith-Tuff und 5-40 Gewichtsprozent, vorzugsweise 10-30 Gewichtsprozent Alginit, wie berechnet auf der Basis des Gewichts des Präparat, und optional 5-30 Gewichtsprozent, vorzugsweise 10-20 Gewichtsprozent Geflügelmist werden zu einer durchschnittlichen Partikelgröße zwischen 0,05 und 500 µm, vorzugsweise zwischen 0,05 und 100 µm, bevorzugter zwischen 0,05 und 40 µm, am meisten bevorzugt 1-10 µm, gemahlen, Homogenisieren und optional Beimischen von 0,01-10 Gewichtsprozent, vorzugsweise 1-6 Gewichtsprozent Zinksulfat-Monohydrat, 0,01-2 Gewichtsprozent, vorzugsweise 0,1-1 Gewichtsprozent Molybdän, Kobalt, Kupfer enthaltendes Salz, 0,01-15 Gewichtsprozent, vorzugsweise 0,1-10 Gewichtsprozent Kaliumchlorid, 0,01-30 Gewichtsprozent, vorzugsweise 0,1-20 Gewichtsprozent eines flüssigen Bodenverbesserungspräparats (zum Beispiel Amalgerol Premium und/oder C₈₋₁₀ nicht-ionisches Alkylpolyglycosid), 0,01-5 Gewichtsprozent Lignosulphonat-Kalzium- und/oder Magnesiumsalz, 0,01-5 Gewichtsprozent, vorzugsweise 1-3 Gewichtsprozent Kalziumchlorid, 0,01-5 Gewichtsprozent, vorzugsweise 1-3 Gewichtsprozent Kalium-Huminat und Ausgleichswasser ergebend einen Wassergehalt zwischen 0-5 Gewichtsprozent, Drücken des Gemischs unter Verwendung von 1 mm Lochgröße in einen Extruder bei einer Temperatur zwischen 20 und 100°C, vorzugsweise zwischen 50 und 100°C, am meisten bevorzugt zwischen 60 und 80°C, Übertragen der austretenden Extrudate nach kurzem Abkühlen und Trocknen in einen Spheronisierer übertragen, Aufbrechen der Extrudate in einem Spheronisierer in Stäbe mit einer Größe von 0,1-2,0 mm und, wenn gewünscht, Abtrennen der Fraktion der Größe 0,4-1,2 mm mit Hilfe eines vibrierenden Siebs.

22. Verfahren gemäß einem der Ansprüche 18-20, wobei das Präparat in Form einer Suspension ist, umfassend: Auflösen in 30-60 Gewichtsprozent, vorzugsweise 35-45 % Gewichtsprozent Wasser, berechnet auf Basis des Gewichts des Präparats, von 0,05-1 Gewichtsprozent, vorzugsweise 0,05-1,5 Gewichtsprozent Natrium-Benzoat, 1-5 Gewichtsprozent, vorzugsweise 2-3 Gewichtsprozent ethoxyliertes-phosphatiertes Tristyrylphenol, 0,1-3 Gewichtsprozent, vorzugsweise 0,5-1 Gewichtsprozent ethoxyliertes-phosphatiertes Rizinusöl, und 1-10 Gewichtsprozent, vorzugsweise 2-7 Gewichtsprozent Monopropylen-Glycol, optional 0,01-5 Gewichtsprozent, vorzugsweise 0,5-2 Gewichtsprozent Lignosulphonat-Natriumsalz und Beifügen zu der so erhaltenen Lösung wie berechnet auf Basis des Gewichts des Präparats, von 2-10 %, vorzugsweise 4-6 Gewichtsprozent Zeolith enthaltenden Rhiolith-Tuff, 5-30 Gewichtsprozent, vorzugsweise 10-20 % Alginit, 5-20 Gewichtsprozent, vorzugsweise 8-16 Gewichtsprozent Harnstoff-Formaldehyd-Kondensat, 5-20 Gewichtsprozent, vorzugsweise 8-16 Gewichtsprozent C₈₋C₁₀ nichtionisches Alkylpolyglycosid, 1-10 Gewichtsprozent, vorzugsweise 2-7 Gewichtsprozent kurzkettige Polysaccharid-Mischung und anschließend 1-5 Gewichtsprozent, vorzugsweise 2-3 Gewichtsprozent Kalium-Huminat, einheitliches in Suspension-Bringen des so erhaltenen Gemischs, und, falls gewünscht, Stabilisieren der Suspension durch Beifügen von 0,01-1 Gewichtsprozent, vorzugsweise 0,5-1,5 Gewichtsprozent Silikon-Antischaum und/oder 0,01-0,1 Gewichtsprozent, vorzugsweise 0,05-1,5 Gewichtsprozent Xanthan und anschließendes Mahlen zu einer durchschnittlichen Partikelgröße zwischen 1 und 10 Mikron und, falls gewünscht, Filtern und Verpacken.

## Revendications

1. Préparation de conditionnement du sol contenant de l'alginite et de la zéolite, **caractérisée en ce que** la taille particulaire moyenne des composants de zéolite et d'alginite de la préparation est comprise entre 0,05 et 500 µm.

2. Préparation selon la revendication 1, **caractérisée en ce que** la taille particulaire moyenne de l'alginite et la zéolite utilisées en son sein est comprise entre 0,05 et 100 µm, de préférence entre 0,05 et 40 µm, de manière préférée entre toutes entre 1 et 10 µm.

3. Préparation selon la revendication 1 ou la revendication 2, **caractérisée en ce que** la préparation contient d'autres excipients, de préférence des tensioactifs.

4. Préparation selon les revendications 1 à 3, **caractérisée en ce que** la préparation contient comme tensioactif un tensioactif ionique et/ou non ionique, comme tensioactif ionique, un tensioactif cationique ou anionique ou un mélange de ceux-ci.

5. Préparation selon les revendications 1 à 4, **caractérisée en ce que** la préparation peut contenir comme tensioactif non ionique, par exemple, des alcools gras, tels que l'alcool cétylique, l'alcool stéarylique, des polyoxyéthylèneglycols et des éthers alkyliques de ceux-ci, par exemple, le monododécyléther d'octaéthylèneglycol, le monododécyléther de pentaéthylèneglycol, des éthers alkyliques de polyéthylèneglycol ou des éthers de glycoside, tels que le décyl-glycoside, le lauryl glycoside, l'octyl glycoside, l'alkylpolyglycoside, l'éther octylphénylique de polyoxyéthylène (Triton X-100), des alkylphénoléthers de polyoxyéthylèneglycol, par exemple, le Nonoxynol-9, des esters de glycérol, tels que le laurate de glycérol, des polysorbates, des alkylesters de sorbitan, des polyéthylèneglycol-polypropylène glycols (poloxamères).

6. Préparation selon les revendications 1 à 5, **caractérisée en ce qu'**elle contient comme tensioactif ionique de préférence des tensioactifs anioniques, comme tensioactif anionique, par exemple, la carboxyméthylcellulose sodique ayant un degré d'éthérification de 60 à 80 % et un poids moléculaire de 1 à 5*10³, un dérivé anionique d'alkylpolyglycoside, des sulfates alkyliques, par exemple, le laurylsulfate d'ammonium, le laurylsulfate de sodium, des sulfonates, tels que par exemple, le sulfosuccinate dioctylique, des alkylbezène sulfonates, des phosphonates, par exemple, des sulfonates d'arylalkyle, des phosphonates d'alkyléther, des carboxylates, tels que par exemple, des sels d'acide gras, comme le stéarate de sodium, de préférence un dérivé anionique d'un alkylpolyglycoside de la Formule générale [R-O-(G)ₓ]ₙ-(D)_{y} (I.), où dans la Formule générale (I.) :
R = groupe aliphatique à nombre de carbone en C₆₋₂₀, de préférence C₈₋₁₆ saturé ou insaturé, linéaire ou ramifié,
G = résidu de sucre réduit, de préférence résidu de glucose, qui est lié à travers la liaison R-O à un autre groupe O-glycoside,
O = atome d'oxygène,
D = résidu acyle d'un acide polycarboxylique sous forme de sel ;
peut contenir comme tensioactif cationique, par exemple, des sels d'ammonium quaternaires, par exemple, du bromure de cétyltriméthylammonium, du chlorure de cétyltriméthylammonium.

7. Préparation selon les revendications 1 à 5, **caractérisée en ce que** la préparation contient comme composant de zéolite une zéolite à traitement thermique ou une zéolite traitée avec un acide organique et/ou inorganique.

8. Préparation selon l'une quelconque des revendications 1 à 6, **caractérisée en ce que** la préparation contient d'autres nutriments et excipients végétaux.

9. Préparation selon l'une quelconque des revendications 1 à 7, **caractérisée en ce que** la préparation contient en outre des acides gras, de préférence l'acide caprylique, l'acide pélargonique, l'acide caprynique ou l'acide laurylique ou des mélanges de ceux-ci.

10. Préparation selon l'une quelconque des revendications 1 à 9, **caractérisée en ce que** la préparation contient en outre du phosphate brut ou du monophosphate d'ammonium comme nutriment végétal.

11. Préparation selon les revendications 1 à 10, **caractérisée en ce que** la préparation contient de la zéolite à traitement thermique.

12. Préparation selon l'une quelconque des revendications 1 à 10, **caractérisée en ce que** la préparation contient de la zéolite traitée avec un acide organique, de préférence l'acide malonique, l'acide fumarique, l'acide succinique, l'acide formique, l'acide acétique, l'acide benzènesulfonique, l'acide paratoluènesulfonique, l'acide méthanesulfonique et/ou avec un acide inorganique, de préférence avec de l'acide phosphorique, l'acide chlorhydrique, l'acide borique, l'acide iodhydrique, l'acide nitrique, l'acide sulfurique, de préférence avec de l'acide phosphorique.

13. Préparation selon l'une quelconque des revendications 1 à 12, **caractérisée en ce que** le rapport pondéral des composants de zéolite et d'alginite dans la préparation l'un par rapport à l'autre est compris entre 50/1 et 1/50, de préférence entre 20/1 et 1/20, plus préférablement entre 5/1 et 1/5.

14. Préparation selon l'une quelconque des revendications 1 à 13, **caractérisée en ce que** la préparation est présentée sous forme solide, de préférence comme poudre ou granulés ou sous forme liquide, de préférence comme suspension ou suspémulsion.

15. Préparation selon l'une quelconque des revendications 1 à 14, **caractérisée en ce que** la préparation contient, tel que calculé en fonction du poids de la préparation, 5 à 35 pour cent en poids, de préférence 10 à 30 pour cent en poids de tuf rhyolitique, lequel tuf rhyolitique est non traité, en option en feu et/ou prétraité avec de l'acide phosphorique ou de l'Amalgerol premium, 5 à 35 pour cent en poids, de préférence 10 à 30 pour cent en poids d'alginite, 1 à 15 pour cent en poids, de préférence 2 à 10 pour cent en poids de tensioactif ionique, par exemple, des lignosulfonates, tels que par exemple, des lignosulfonates de calcium ou magnésium et/ou 1 à 15 pour cent en poids, de préférence 2 à 10 pour cent en poids de tensioactifs non ioniques, tels que par exemple, des alkylpolyglycosides, et en option des nutriments végétaux organiques et inorganiques, des produits chimiques de protection végétale et des excipients.

16. Préparation selon la revendication 14 ou 15, sous la forme de granulés qui sont constitués de particules ayant une taille particulaire moyenne comprise entre 0,05 et 500 µm, de préférence entre 0,05 et 100 µm, plus préférablement entre 0,05 et 40 µm, de manière préférée entre toutes entre 1 et 10 µm, et en ce que les granulés contiennent, en fonction du poids de la préparation, 10 à 80 pour cent en poids, de préférence 30 à 70 pour cent en poids de monophosphate d'ammonium, 5 à 40 pour cent en poids, de préférence 10 à 30 pour cent en poids de tuf rhyolitique et 5 à 40 pour cent en poids, de préférence 10 à 30 pour cent en poids d'alginite, et en option 5 à 30 pour cent en poids, de préférence 10 à 20 pour cent en poids de poulaitte, 0,01 à 10 pour cent en poids, de préférence 1 à 6 pour cent en poids de sulfate de zinc monohydraté, 0,01 à 2 pour cent en poids, de préférence 0,1 à 1 pour cent en poids de sel contenant du molybdène, cobalt et/ou cuivre, 0,01 à 15 pour cent en poids, de préférence 0,1 à 10 pour cent en poids de chlorure de potassium, 0,01 à 30 pour cent en poids, de préférence 0,1 à 20 pour cent en poids de préparation de conditionnement du sol liquide, de préférence d'Amalgerol Prémium et/ou d'alkylpolyglycoside non ionique en C₈-C₁₀, 0,01 à 5 pour cent en poids de sel de calcium et/ou de magnésium de lignosulfate, 0,01 à 5 pour cent en poids, de préférence 1 à 3 pour cent en poids de chlorure de calcium, 0,01 à 5 pour cent en poids, de préférence 1 à 3 pour cent en poids d'humate de potassium et 0 à 5 pour cent en poids d'eau.

17. Préparation selon la revendication 14 ou la revendication 15 sous la forme d'une suspension, dans laquelle la taille particulaire moyenne des particules solides de la suspension est comprise entre 1 et 10 µm et en ce que la suspension contient, tel que calculé en fonction du poids de la préparation, 2 à 10 pour cent en poids, de préférence 4 à 6 pour cent en poids de zéolite contenant du tuf rhyolitique, 5 à 30 pour cent en poids, de préférence 10 à 20 pour cent en poids d'alginite, 5 à 20 pour cent en poids, de préférence 8 à 16 pour cent en poids de condensat d'urée-formaldéhyde, 5 à 20 pour cent en poids, de préférence 8 à 16 pour cent en poids d'alkylpolyglycoside non ionique en C₈-C₁₀, 1 à 10 pour cent en poids, de préférence 2 à 7 pour cent en poids de polysaccharide à chaîne courte, 1 à 5 pour cent en poids, de préférence 2 à 3 pour cent en poids d'humate de potassium, 1 à 5 pour cent en poids, de préférence 2 à 3 pour cent en poids de tristyrylphénol éthoxyléphosphaté, 0,1 à 3 pour cent en poids, de préférence 0,5 à 1 pour cent en poids d'huile de ricin éthoxyléephosphatée, en option 0,01 à 5 pour cent en poids, de préférence 0,5 à 2 pour cent en poids de sel de sodium de lignosulfonate, 1 à 10 pour cent en poids, de préférence 2 à 7 pour cent en poids de monopropylèneglycol, en option 0,01 à 1 pour cent en poids, de préférence 0,5 à 1,5 pour cent en poids d'antimousse à la silicone et/ou 0,01 à 1 pour cent en poids, de préférence 0,05 à 1,5 pour cent en poids de gomme de xanthane, 0,05 à 1 pour cent en poids, de préférence 0,05 à 1,5 pour cent en poids de benzoate de sodium et 30 à 60 pour cent en poids, de préférence 35 à 45 pour cent en poids d'eau.

18. Procédé de préparation d'une préparation de conditionnement du sol contenant de l'alginite et de la zéolite, **caractérisé en ce que**
a.) l'alginite et la zéolite sont mélangées et soit en elles-mêmes, soit avec l'addition d'autres excipients, de préférence des tensioactifs, sont broyées de manière connue à la taille particulaire moyenne de 0,05 à 500 µm, ou
b.) l'alginite et la zéolite sont broyées séparément à la taille particulaire de 0,05 à 500 µm, en option avec l'addition d'autres excipients, de préférence des tensioactifs, ou
c.) la zéolite est broyée individuellement à une taille particulaire moyenne comprise entre 0,05 et 500 µm, imprégnée d'une suspension contenant de l'alginite ayant une taille particulaire moyenne comprise entre 0,05 et 500 µm, et en option en mélangeant d'autres excipients, de préférence des tensioactifs, et si on le souhaite, le mélange broyé ainsi obtenu est transformé en une suspension, une émulsion, une pastille ou un granulé de manière connue.

19. Procédé selon la revendication 18, **caractérisé en ce que** l'alginite et la zéolite utilisées sont broyées à une taille particulaire moyenne comprise entre 0,05 et 100 µm, de préférence 0,05 et 40 µm, de manière préférée entre toutes 0,1 et 10 µm.

20. Procédé selon la revendication 18 ou 19, **caractérisé en ce que** comme tensioactif, 0,1 à 15 pour cent en poids, de préférence 1 à 10 pour cent en poids de tensioactif ionique et/ou non ionique, comme tensioactif ionique, des tensioactifs anioniques ou cationiques ou des mélanges de ceux-ci, sont utilisés, où le tensioactif non ionique est par exemple un alcool gras, tel que l'alcool cétylique, l'alcool stéarylique, des polyoxyéthylèneglycols et des éthers alkyliques de ceux-ci, tels que par exemple, le monododécyléther d'octaéthylèneglycol, le monododécyléther de pentaéthylèneglycol, des éthers alkyiques de polyéthylèneglycol, des éthers de glycoside, tels que le décyl-glycoside, le lauryl glycoside, l'octyl-glycoside, l'alkylpolyglycoside, l'éther octylphénylique de polyoxyéthylène (Triton X-100), des alkylphénoléthers de polyoxyéthylèneglycol, par exemple, le Nonoxynol-9, des esters de glycérol, tels que par exemple le laurate de glycérol, le polysorbate, des alkylesters de sorbitan, des polyéthylèneglycol-polypropylène glycols (poloxamères).

21. Procédé selon les revendications 18 à 20, dans lequel la préparation est sous la forme de granulés comprenant 10 à 80 pour cent en poids, de préférence 30 à 70 pour cent en poids de monophosphate d'ammonium, 5 à 40 pour cent en poids, de préférence 10 à 30 pour cent en poids de tuf rhyolitique et 5 à 40 pour cent en poids, de préférence 10 à 30 pour cent en poids d'alginite, calculé en fonction du poids de la préparation et en option 5 à 30 pour cent en poids, de préférence 10 à 20 pour cent en poids de poulaitte, sont broyés à la taille particulaire moyenne comprise entre 0,05 et 500 µm, de préférence entre 0,05 et 100 µm, plus préférablement entre 0,05 et 40 µm, de manière préférée entre toutes 1 et 10 µm, en homogénéiser et mélanger en option 0,01 à 10 pour cent en poids, de préférence 1 à 6 pour cent en poids de sulfate de zinc monohydraté, 0,01 à 2 pour cent en poids, de préférence 0,1 à 1 pour cent en poids de sel contenant du molybdène, cobalt, cuivre, 0,01 à 15 pour cent en poids, de préférence 0,1 à 10 pour cent en poids de chlorure de potassium, 0,01 à 30 pour cent en poids, de préférence 0,1 à 20 pour cent en poids de préparation de conditionnement du sol liquide (par exemple, Amalgerol Prémium et/ou alkylpolyglycoside non ionique en C₈-C₁₀), 0,01 à 5 pour cent en poids de sel de calcium et/ou de magnésium de lignosulfate, 0,01 à 5 pour cent en poids, de préférence 1 à 3 pour cent en poids de chlorure de calcium, 0,01 à 5 pour cent en poids, de préférence 1 à 3 pour cent en poids d'humate de potassium et de l'eau pour l'équilibre, donnant une teneur en eau entre 0 à 5 pour cent en poids, pousser le mélange en utilisant une taille d'orifice de 1 mm dans une extrudeuse à une température comprise entre 20 et 100°C, de préférence entre 50 et 100°C, de manière préférée entre toutes entre 60 et 80°C, transférer les extrudats sortants après un court refroidissement et séchage dans un sphéroniseur, décomposer les extrudats dans un sphéroniseur en tiges ayant 0,1 à 2,00 mm de taille et si on le souhaite, séparer la fraction de 0,4 à 1,2 mm de taille en utilisant un tamis vibrant.

22. Procédé selon l'une quelconque des revendications 18 à 20, dans lequel la préparation est sous la forme d'une suspension qui comprend dissoudre dans 30 à 60 pour cent en poids, de préférence dans 35 à 45 pour cent en poids d'eau, tel que calculé en fonction du poids de la préparation, 0,05 à 1 pour cent en poids, de préférence 0,05 à 1,5 pour cent en poids de benzoate de sodium, 1 à 5 pour cent en poids, de préférence 2 à 3 pour cent en poids de tristyrylphénol éthoxylé-phosphaté, 0,1 à 3 pour cent en poids, de préférence 0,5 à 1 pour cent en poids d'huile de ricin éthoxylée-phosphatée et 1 à 10 pour cent en poids, de préférence 2 à 7 pour cent en poids de monopropylèneglycol, en option 0,01 à 5 pour cent en poids, de préférence 0,5 à 2 pour cent en poids de sel de sodium de lignosulfonate, et ajouter à la solution ainsi obtenue, tel que calculé sur le poids de la préparation, 2 à 10 pour cent en poids, de préférence 4 à 6 pour cent en poids de zéolite contenant du tuf rhyolitique, 5 à 30 pour cent en poids, de préférence 10 à 20 pour cent en poids d'alginite, 5 à 20 pour cent en poids, de préférence 8 à 16 pour cent en poids de condensat d'urée-formaldéhyde, 5 à 20 pour cent en poids, de préférence 8 à 16 pour cent en poids d'alkylpolyglycoside non ionique en C₈-C₁₀ et 1 à 10 pour cent en poids, de préférence 2 à 7 pour cent en poids de mélange de polysaccharides à chaîne courte et ensuite 1 à 5 pour cent en poids, de préférence 2 à 3 pour cent en poids d'humate de potassium, mettre en suspension le mélange ainsi obtenu uniformément et si on le souhaite, stabiliser la suspension en ajoutant 0,01 à 1 pour cent en poids, de préférence 0,5 à 1,5 pour cent en poids d'antimousse à la silicone et/ou 0,01 à 1 pour cent en poids, de préférence 0,05 à 1,5 pour cent en poids de gomme de xanthane, et broyer ensuite à la taille particulaire moyenne comprise entre 1 et 10 microns et si on le souhaite, filtrer et emballer.
